# EUROPÄISCHE PATENTSCHRIFT

(11) **EP 1 409 339 B1**
(45) Veröffentlichungstag und Bekanntmachung des Hinweises auf die Patenterteilung: **02.07.2008**
(21) Anmeldenummer: 01944972.7
(22) Anmeldetag: 31.05.2001
(51) Int. Cl.: B63H 9/06

(54) **WINDANGETRIEBENES WASSERFAHRZEUG**
WIND-PROPELLED WATERCRAFT
BATEAU ENTRAINE PAR ENERGIE EOLIENNE

(30) Priorität: 31.05.2000 DE 10027691; 21.12.2000 DE 10065630
(43) Veröffentlichungstag der Anmeldung: 21.04.2004
(73) Patentinhaber: Wrage, Stephan, 22765 Hamburg (DE)
(72) Erfinder: Wrage, Stephan, 22765 Hamburg (DE)
(74) Vertreter: Glawe, Delfs, Moll
(86) Internationale Anmeldenummer: PCT/DE2001/002124
(87) Internationale Veröffentlichungsnummer: WO 2001/092102

(56) Entgegenhaltungen:
- DE-A- 3 518 131
- FR-A- 2 569 159
- FR-A- 2 639 605
- FR-A- 2 690 129
- US-A- 4 497 272
- US-A- 4 930 729
- US-A- 4 947 775
- US-A- 4 969 411

## Beschreibung

Die Erfindung betrifft windangetriebene Wasserfahrzeuge, bei denen mindestens ein flächiges Element mit mindestens einer Halteleine an einem Fahrzeugkörper, insbesondere einem Schiffsrumpf, gehalten ist. Die Erfindung kann daher insbesondere für Segelschiffe und auch andere Wasserfahrzeuge allein oder mit zusätzlichen herkömmlichen Antrieben eingesetzt werden.

Bisher ist es üblich, für den Antrieb von Wasseraber auch anderen Fahrzeugen zur Ausnutzung von Windenergie ein- oder mehrere Segel aus textilen Materialien zu verwenden, die mindestens an einem Mast und mit sogenannten Bäumen oder auch Rahen zusätzlich stabilisiert sind. Solche Segel werden entsprechend der Wind- und gewünschten Fahrtrichtung ausgerichtet und nutzen zumindestens eine Windkraftkomponente, die in der Regel lediglich ein Teil der gesamten Windkraft ausmacht, aus, um einen Vortrieb zu erzeugen.

Bei dieser Form wirken aber auch in der Längsachse, in der auch der bzw. die Schiffsmast(e) angeordnet sind, Drehmomente, die mehr oder weniger eine Schräglage um die Längsachse eines Schiffsrumpfes bzw. Fahrzeugkörpers bewirken. Um diesem Effekt entgegen zu wirken, werden bei Segelschiffen bzw. -booten je nach Größe der verwendeten Segelflächen Schwerte bzw. auch kostenintensive Kielkonstruktionen eingesetzt. Da hier aber Grenzen gesetzt sind, kann Fahrt- und Windrichtung nur bedingt zueinander optimiert ausgenutzt und das Schiff entsprechend gesteuert werden, so dass bei ungünstigen Windrichtungen ein häufiges Kreuzen erforderlich ist, was selbstverständlich zur Verlängerung der Fahrzeit zu einem bestimmten Zielort führt.

Bei hohen Windgeschwindigkeiten stellt insbesondere der bzw. die Schiffsmast(e) einen Schwachpunkt dar und in dem Fall, dass der Mast bzw. die Masten bricht/brechen, sind Segelboote und -schiffe wegen des fehlenden Vortriebes nahezu manövrierunfähig und den Wetter- und Wasserunbilden ohne jegliche Gegenwehr ausgesetzt, so dass für das Schiffspersonal ein hohes Gefahrenpotential gegeben ist.

Bei hohen Windgeschwindigkeiten kann es zur Vermeidung der besagten Gefahren erforderlich sein, zumindest einen Teil der Segelfläche durch Reffen zu reduzieren, um die auf die Schiffsmasten wirkenden Kräfte und Momente zu verringern. Dadurch verringert sich natürlich auch die Fahrtgeschwindigkeit eines solchen Bootes bzw. Schiffes.

Das Dokument US 5642683 zeigt ein fallschirmförmiges Element das nur mit einer Halteleine am Schiff befestigt ist.

Es ist daher Aufgabe der Erfindung, windangetriebene Wasserfahrzeuge zur Verfügung zu stellen, mit denen die Windkräfte besser für den Vortrieb ausgenutzt und die am Fahrzeugkörper bzw. Schiffsrumpf wirkenden Drehmomente um die Längsachse verringert werden können.

Erfindungsgemäß wird diese Aufgabe mit den Merkmalen des Anspruchs 1 gelöst. Vorteilhafte Ausgestaltungsformen und Weiterbildungen der Erfindung können mit den in den untergeordneten Ansprüchen genannten Merkmalen realisiert werden.

Das erfindungsgemäße Wasserfahrzeug verwendet mindestens ein flächiges Element, das ähnlich wie ein herkömmliches Segel oder ein ebenfalls hinlänglich bekannter Drachen ausgebildet ist, um den Vortrieb infolge Windkraftwirkung zu erhöhen und die bereits erwähnten Kippmomente weitestgehend zu reduzieren. Ein solches flächiges Element, das möglichst eine kleine Masse aufweisen soll, ist unmittelbar am Fahrzeugkörper mit mindestens einer Halteleine gehalten, wobei die Halteleine am flächigen Element an mindestens drei in Abständen voneinander angeordneten Punkten befestigt ist, um das flächige Element in vertikaler und horizontaler Richtung auslenken bzw. ausrichten zu können, um je nach gewünschter Fahrtrichtung unter Berücksichtigung der jeweiligen Windrichtung eine optimale Ausrichtung des flächigen Elementes zu ermöglichen.

Dies kann soweit führen, dass das flächige Element mit Hilfe einer Halteleinensteuerung so ausgerichtet und in den Wind gestellt wird, dass es in vertikaler Richtung nach oben bzw. unten in Windschichten mit höheren Windgeschwindigkeiten bewegt werden kann.

Das eine bzw. auch mehrere, wobei mehrere flächige Elemente bevorzugt miteinander verbunden sind, kann aus einem leichten planaren Material bestehen. Günstigerweise können aber auch flexible Materialien für solche flächigen Elemente eingesetzt werden, die sich dann infolge der Windkraft verformen und den Luftwiderstandsbeiwert (EW) entsprechend erhöhen, so dass die für den Vortrieb nutzbare Kraftkomponente ebenfalls erhöht ist.

An dem einen bzw. auch mehreren flächigen Element(en) können auch zur Erhöhung der Stabilität und gegebenenfalls des Auftriebes für ein solches flächiges Element Druckgaskammern angeordnet, daran ausgebildet bzw. auch daran befestigt werden. Eine solche unmittelbar am flächigen Element ausgebildete bzw. angeordnete Druckgaskammer, in der bzw. denen komprimiertes Gas enthalten ist, führt zur Erhöhung der Stabilität eines solchen flächigen Elementes. Solche Druckgaskammern können also Stützfunktion, ähnlich wie starre Rahmenkonstruktionen bei kleinerer Masse für flächige Elemente erfüllen. Mit Hilfe einer oder mehrerer Druckgaskammer(n) kann die Form und Gestalt des flächigen Elementes definiert werden.

An den Druckgaskammern können Anschlüsse mit Ventilen vorhanden sein, die ein Befüllen bzw. Entleeren der Druckgaskammern ermöglichen.

Ganz besonders vorteilhaft ist es, die Druckgaskammern mit einem Gas niedrigerer Dichte als Luft zu befüllen, so dass für die flächigen Elemente eine Auftriebskraftkomponente erhalten werden kann. Geeignete Befüllgase sind z.B. Helium, aber auch Wasserstoff. Bei ausreichend großem Volumen und ausreichender Befüllung mit solch einem Gas mit relativ niedrigerer Dichte kann erreicht werden, dass die Auftriebskraft zumindest größer als die Gewichtskraft des flächigen Elementes ist. Sie sollte aber auch möglichst größer als die anteilige Gewichtskraft der Halteleine(n) sein. In diesem Fall schwebt das flächige Element frei in der atmosphärischen Luft und es kann wesentlich leichter manövriert und in Bezug zur herrschenden Windrichtung ausgerichtet werden. Außerdem wird so verhindert, dass es auf den Erdboden bzw. die Wasseroberfläche herabfällt und dann ein aufwendiger Vorgang erforderlich ist, um das flächige Element wieder in den Wind zu bringen.

Die Druckgaskammer(n) können aber auch ähnlich wie ein herkömmlicher Fesselbalon mit einem Gas niedriger Dichte befüllt und daran ein solches flächiges Element aufgehangen werden. Für den Fall, dass ein flächiges Element aus einem flexiblen Material verwendet worden ist, ist es günstig, zumindest zwei solcher in Fesselbalonform ausgebildeter Druckgaskammern zu verwenden.

Die Druckgaskammern können aber auch mit Öffnungen versehen sein, über die sie infolge eines Staudruckes mit Luft befüllbar sind, wenn das flächige Element in den Wind gerichtet ist.

Um die bereits vorab erwähnte Ausrichtung solcher flächiger Elemente in vertikaler, wie auch horizontaler Richtung zu ermöglichen, ist es günstig, die Länge der jeweils verwendeten Halteleinen zwischen flächigem Element und Fahrzeugkörper bzw. Schiffsrumpf zu verändern. Dabei kann jede Halteleine einzeln, individuell verlängert bzw. auch verkürzt werden. Es besteht aber auch die Möglichkeit, jeweils zwei solcher Halteleinen, die in einer horizontalen bzw. vertikalen Ebene am flächigen Element angeordnet sind, mit gleicher Länge in entgegengesetzter Richtung zu verlängern bzw. zu verkürzen.

Durch gleichzeitiges gleichmäßiges Verlängern oder Verkürzen aller Halteleinen kann das flächige Element in den Wind gesetzt oder eingeholt werden.

Die zur Veränderung der Länge der Halteleinen verwendeten Elemente können beispielsweise Rollen sein, auf die bzw. von denen die jeweilige Halteleine auf bzw. abgewickelt werden kann. Solche Rollen können so aufgebaut sein, wie die in der Segelsprache als "Winschen" bezeichneten Elemente.

Der Antrieb kann manuell, aber auch in gesteuerter Form über Elektro- bzw. Getriebemotoren erfolgen, wobei die Steuerung des flächigen Elementes, also die Verkürzung und auch Verlängerung der Halteleinen unter Berücksichtigung der gemessenen Windrichtung, der gewünschten Fahrtrichtung und/oder gegebenenfalls auch unter Berücksichtigung der an den einzelnen Halteleinen gemessenen Zugkräfte mittels einer elektronischen Steuerung erfolgen kann.

Insbesondere zur Vermeidung bzw. Verringerung der um die Längsachse wirkenden Drehmomente (Kippmomente) ist es vorteilhaft, den Kraftangriffspunkt der Halteleinen am Fahrzeugkörper bzw. Schiffsrumpf, unter Berücksichtigung der jeweiligen Wind- und Fahrtrichtung zu verändern. Dies trifft unabhängig davon zu, ob bei mehreren Hlateleinen diese nahe beieinanderliegend am Fahrzeugkörper befestigt sind, oder sich ein gemeinsamer virtueller Kraftangriffspunkt aus den Kraftvektoren dieser Halteleinen ergibt.

Hierfür sind verschiedene Lösungen möglich.

So besteht einmal die Möglichkeit, den Kraftangriffspunkt der Halteleinen am Fahrzeugkörper mit Hilfe einer Führung entsprechend anzupassen. Im einfachsten Fall kann eine solche Führung ein orthogonal zur Längsachse des Fahrzeugkörpers ausgerichteter Bügel sein, um den die Halteleine(n) umgelegt wird/werden, so dass je nach Ausrichtung des flächigen Elementes in Bezug zur Längsachse der Kraftangriffspunkt selbstätig verlagert wird. Ganz besonders vorteilhaft ist es, diesen Querbügel bogenförmig auszubilden, so dass die konvex gewölbte Kontur eines solchen Bügels nach oben bzw. in Richtung der Forderfront des Fahrzeugkörpers (Bugrichtung) schräg nach vorn geneigt weist.

Eine solche Lösung kann zusätzlich weitergebildet werden, wenn eine solche Querführung in zwei parallel zur Längsachse des Fahrzeugkörpers ausgerichteten Führungen aufgenommen ist und mit Hilfe solcher Führungen entlang der Längsachse des Fahrzeugkörpers verschoben werden kann.

Eine weitere Alternative zur Veränderung des Kraftangriffspunktes der Halteleinen besteht darin, diesen exentrisch auf einem Drehteller anzuordnen, der in seinem Zentrum um eine vertikal ausgerichtete Drehachse drehbar ist, so dass der Kraftangriffspunkt in Bezug zur Längsachse des Fahrzeugkörpers infolge der exentrischen Anordnung und der entsprechend wirkenden Drehmomente sich selbstätig in seiner Lage verändern kann. Eine solche Lageveränderung kann aber auch in gesteuerter Form mit einem entsprechenden Drehantrieb für den Drehteller realisiert werden.

Eine dritte Alternative zur Variation des Kraftangriffspunktes für die Haltleine(n) besteht in der Verwendung eines hebelförmigen Kragarmes, der an einer Seite ein Gelenk aufweist, über das der hebelförmige Kragarm z.B. auf der Längsachse des Fahrzeugkörpers befestigt ist. In einem Abstand, bevorzugt am Ende dieses Kragarmes sind dann die Halteleine(n) befestigt, so dass bei Verschwenken des Kragarmes um das Gelenk eine Variation der Lage des Kraftangriffspunktes der Halteleine(n) in Bezug zur Längsachse des Fahrzeugkörpers erreicht werden kann. Als Gelenk sind beispielsweise Kugel- oder Kardangelenke geeignet, die auch in einer rechtwinklig zur Längsachse ausgerichteten Führung befestigt sein können.

Der Kraftangriffspunkt kann außerdem in Bezug zum sogenannten Lateraldruckpunkt verändert und wie nachfolgend noch zu erklären sein wird, gezielt eingestellt werden. Beim Lateraldruckpunkt handelt es sich um den Flächenschwerpunkt der Projektionsfläche auf der Längsachse des Wasserfahrzeuges. Er kann unter Umständen auch mit der mittleren Querachse zusammenfallen bzw. die Querachse in der Nähe des Lateraldruckpunktes angeordnet sein, so dass auch diese in vereinfachter Form als Bezug für den Kraftangriffspunkt genutzt werden kann.

Durch die gezielte Beeinflussung der Lage des Kraftangriffspunktes in Bezug zum Laterdruckpunkt kann auch Einfluß auf die Fahrtrichtung (Kurs) des Wasserfahrzeuges genommen werden. So kann bei einer Lage des Kraftangriffspunktes vor dem Lateraldruckpunkt das Wasserfahrzeug in Richtung der windabgewandten Seite (Lee) und bei Positionierung des Kraftangriffspunktes in entgegengesetzter Richtung, also hinter den Lateraldruckpunkt (immer in Fahrtrichtung gesehen) in Richtung der dem Wind zugewandten Seite (Luv) gedreht wird.

Durch Beeinflussung der Position des Kraftangriffspunktes des flächigen Elementes orthogonal zur Längsachse bzw. Fahrtrichtung kann die Krängung gezielt beeinflusst, vollständig kompensiert werden. So kann in bestimmten Fällen sogar eine negative Krängung eingehalten werden, wenn beispielsweise der Kraftangriffspunkt sehr weit in Richtung der windabgewandten Seite verschoben worden ist.

Neben den bereits erwähnten Elementen zur Veränderung der wirksamen Längen der Halteleine(n) können zwischen dem Kraftangriffspunkt und den flächigen Elementen zusätzliche Umlenkrollen angeordnet werden. Über diese Umlenkrollen können die Halteleinen umgelenkt werden, was sich einmal günstig bei der Lageveränderung des Kraftangriffspunktes auswirkt. Zum zweiten, können diese Umlenkrollen auch verschoben werden, wodurch auf relativ einfache und ohne große erforderliche Betätigungskräfte eine alleinige bzw. zusätzliche Längenveränderung von mehreren Halteleinen erreicht werden kann.

Für ein segel- bzw. drachenförmiges flächenförmiges Element, das, möglichst mit Verwendung der bereits erwähnten Druckgaskammern flächig aufgespannt worden ist, können die verschiedensten geometrischen Formen eingesetzt werden, wobei eine Optimierung der Formen der flächigen Elemente für den jeweiligen Einsatz, also auch unter Berücksichtigung der Ausführung des verwendeten Fahrzeugkörpers vorgenommen werden kann.

Für eine ausreichende Manövrierfähigkeit des flächigen Elementes ist es vorteilhaft, mindestens drei unabhängig voneinander, in ihrer wirksamen Länge veränderbaren Halteleinen zu verwenden, die dann am Fahrzeugkörper und am flächigen Element befestigt sind. Die Befestigung am flächigen Element erfolgt so, dass die drei Befestigungspunkte der Halteleinen ein Dreieck aufspannen und so bei entsprechender Verlängerung bzw. Verkürzung der wirksamen Längen der drei Halteleinen das flächige Element mit Hilfe der angreifenden Windkraft in horizontaler und auch vertikaler Richtung bewegt werden kann, und außerdem der Anstellwinkel in Bezug zur herrschenden Windrichtung veränderbar ist.

Noch günstiger ist es, vier Halteleinen zu verwenden, die die Verbindung zwischen flächigem Element und Fahrzeugkörper darstellen. Dabei sind die vier Halteleinen so am flächigen Element befestigt, dass die Befestigungspunkte ein Viereck aufspannen, wobei möglichst jeweils zwei Befestigungspunkte in einer gemeinsamen horizontalen und die anderen zwei Befestigungspunkte in einer vertikalen Ebene liegen. Um das flächige Element zu manövrieren ist zumindest die Verlängerung bzw. Verkürzung einer Halteleine erforderlich. Es können aber auch die Halteleinen, deren Befestigungspunkte am flächigen Element in einer Ebene liegen, mit möglichst gleicher Länge in jeweils entgegengesetzter Richtung verlängert bzw. verkürzt werden. Wird diese Variante gewählt, kann die jeweils erforderliche Stellkraft entsprechend verringert werden, so dass eine manuelle Betätigung ohne weiters möglich ist.

Mit der Erfindung können die für Wasserfahrzeuge bisher üblichen Kielkonstruktionen zunächst kleiner dimensioniert, wenn nicht gar durch kostengünstigere Schwerte ersetzt werden, da die um die Längsachse wirkenden Momente erheblich reduziert werden.

Es ist auch ein Einsatz in Havariesituationen möglich, wenn z.B. bei einem herkömmlichen Segelschiff oder -boot ein Schiffsmast gebrochen ist und ein an Bord vorhandener erfindungsgemäßer Windantrieb schnell und einfach einsetzbar und für den Vortrieb und Manövrierfähigkeit sorgen kann.

Vorteilhaft ist es außerdem, am Fahrzeugkörper mindestens ein hydrodynamisch wirksames Element vorzusehen, das man auch mit dem Begriff "Hydrofoil" bezeichnen kann. Ein solches Element ist dabei am Fahrzeugkörper unterhalb der Wasserlinie angeordnet und kann bei der Fortbewegung das Wasserfahrzeug stabilisieren.

Ganz besonders vorteilhaft kann ein solches hydrodynamisch wirksames Element um eine Achse verschwenkt werden, so dass durch die Strömungsverhältnisse eine Auf- oder Abtriebskraft für das Wasserfahrzeug eingestellt werden kann.

Diese hydrodynamisch wirksamen Elemente sollten jedoch so angeordnet werden, dass in Bezug zur Fahrzeuglängsachse symmetrische Kraftverhältnisse auftreten. So können beispielsweise zwei solcher Elemente in gleicher Höhe an den beiden Außenseiten des Fahrzeugkörpers angeordnet sein.

Günstigerweise kann außerdem der Schwenkwinkel der hydrodynamisch wirksamen Elemente in Abhängigkeit der Fahrzeuggeschwindigkeit und/oder der Zugkraft des flächigen Elementes eingestellt werden. Insbesondere bei plötzlich auftretenden Windböen kann damit gesichert werden, dass der Fahrzeugkörper auch in Extremsituationen im Wasser gehalten wird. Hierzu kann der Schwenkwinkel der hydrodynamisch wirksamen Elemente durch eine mechanische Kopplung mittels der an Halteleinen oder dem Kraftangriffspunkt wirkenden Zugkraft eingestellt werden.

Diese Elemente können, ähnlich wie Flügel ausgebildet und entweder horizontal oder in einem leicht zur Horizontalen geneigten Winkel ausgerichtet sein.

Die aerodynamischen Eigenschaften des flächigen Elementes können durch Beeinflussung der dreidimensionalen Form, was mittels der Halteleinen und gegebenenfalls zusätzlichen Steuerleinen erfolgen kann, beeinflusst werden. Außerdem können zusätzliche aerodynamisch wirksame Elemente am flächigen Element befestigt sein. Diese aerodynamisch wirksamen Elemente können am flächigen Element schwenkbar befestigt sein und beispielsweise in Klappenform ausgebildet werden, so dass sie mehr oder weniger aufgestellt durch den entsprechend erhöhten Strömungswiderstand für den angreifenden Wind je nach eingestelltem Winkel und der jeweiligen Anordnung am flächigen Element Auftriebs- oder Seitenkräfte hervorrufen und so die Position des flächigen Elementes in Bezug zum Fahrzeugkörper und zur Windrichtung manipuliert werden kann. Die Einstellung des Schwenkwinkels dieser aerodynamisch wirksamen Elemente kann beispielsweise ebenfalls mittels entsprechender Leinen, die zum Fahrzeugkörper geführt sind, erreicht werden.

Vorteilhaft kann es außerdem sein, wenn an den äußeren Rändern des flächigen Elementes Windabrißelemente (Winglets) vorhanden sind, die ebenfalls eine Verbesserung der Aerodynamik hervorrufen können.

Zur Vermeidung von Gefahrensituationen können zusätzliche, vor Überlastung schützende Elemente Verwendung finden. Diese sichern, dass beim Überschreiten einer vorgebbaren maximalen Zugkraft an der einen oder mehreren Halteleinen, diese nicht in voller Größe am Fahrzeugkörper angreifen kann. Eine Möglichkeit, um diesen Überlastzuständen zu entgegnen, besteht darin, die Halteleinen mit einer Feder, einem Dämpfer oder einem Federdämpfersystem zu versehen. Wobei die Feder und Dämpfungscharakteristik so eingestellt werden sollten, dass die entsprechenden Feder- oder Dämpfungskräfte erst bei Überschreiten des bereits erwähnten Schwellwertes wirksam werden und beispielsweise eine Zugfeder mit einer dann degressiven Federcharakteristik ausgewählt werden sollte, so dass die entsprechenden Zugkräfte eines solchen vor Überlast schützenden Elementes wieder verringert werden können.

Eine andere Alternative für ein vor Überlast schützendes Element besteht in der Verwendung von Rutschkupplungen, die beispielsweise an Winschen, die zur Beeinflussung der Länge der Halteleinen gegebenenfalls vorhanden sind.

Eine weitere vorteilhafte Ausgestaltungsform des erfindungsgemäßen Wasserfahrzeuges kann mit einem manipulierbaren Schwert versehen sein. Ein solches Schwert kann, da die auftretende Krängung am erfindungsgemäßen Wasserfahrzeug vollständig zumindest jedoch weitestgehend kompensiert werden kann, in vertikaler Richtung hin und her bewegt werden, so dass die wirksame Fläche eingestellt werden kann.

Ein solches Schwert kann aber auch in Bezug zur Längsachse des Fahrzeugkörpers gedreht werden, so dass es die Funktion eines herkömmlichen Ruders vollständig übernehmen oder unterstützen kann. Außerdem kann mit einem solchen Schwert höher an den Wind gegangen werden (mehr Höhe laufen)

Zur Erhöhung der Sicherheit kann am flächigen Element mindestens eine Sensorleine befestigt sein, die von dort zum Fahrzeugkörper geführt ist. Mit Hilfe dieser Sensorleinen kann bei deren Berührung Einfluß auf den Vortrieb des Wasserfahrzeuges genommen werden und dieser durch entsprechende Beeinflussung der aerodynamisch wirksamen Flächen und Form des flächigen Elementes in sehr kurzer Zeit drastisch reduziert werden. Bevorzugt können zwei Sensorleinen an äußeren Rändern des flächigen Elementes befestigt sein.

Die Steuerung eines erfindungsgemäßen Wasserfahrzeuges kann durch verschiedener Möglichkeiten erleichtert und mit entsprechendem Aufwand auch vollständig automatisiert werden.

So können mit verschiedenen Sensoren ermittelte Messwerte in einer Steuerelektronik verarbeitet und mit dieser Steuerelektronik zumindest die Position des flächigen Elementes in Bezug zur gewünschten Fahrt- und der vorhandenen Windrichtung beeinflusst werden.

Relativ einfach kann die Steuerung eines erfindungsgemäßen Fahrzeuges aber auch rein mechanisch mit Halteleinenanschlagselementen beeinflußt werden, die am Fahrzeugkörper vorhanden sind.

Mit diesen Halteleinenanschlagselementen, die am Fahrzeugkörper zwischen dem jeweiligen Befestigungspunkt der entsprechenden Halteleine und dem flächigen Element angeordnet sind, kann eine Beeinflussung der Position des flächigen Elementes erreicht werden. Im einfachsten Fall kann ein Halteleinenanschlagselement ein am Fahrzeugkörper befestigter vertikal ausgerichteter Stab sein, gegen den die seitlich auswandernde Halteleine, bei entsprechender Bewegung des flächigen Elementes anschlägt und dies zu einer relativen Verkürzung der Halteleine führt, was eine weitere Bewegung des flächigen Elementes in die nicht gewünschte Richtung verhindert.

Ein Halteleinenanschlagelement kann aber auch in Form eines Bügels, der am Fahrzeugkörper befestigt ist, ausgebildet sein. Durch diesen Bügel ist die jeweilige Halteleine geführt, so dass eine Anschlagsbegrenzung beidseitig in horizontaler Richtung und nach oben in vertikaler Richtung gegeben ist.

Das flächige Element für ein erfindungsgemäßes Wasserfahrzeug kann über mindestens eine Druckgaskammer verfügen. Die Druckgaskammer kann ein Teil des flächigen Elementes oder mit dem flächigen Element verbunden sein. Eine solche Druckgaskammer soll aus einem Gasspeicher, in dem komprimiertes Gas, bevorzugt Helium enthalten ist, über eine an die Druckgaskammer angeschlossene bzw. anschließbare erste Leitung befüllt werden können. Dabei soll in der Druckgaskammer ein bestimmtes Gasvolumen eingefüllt werden, das ausreicht, um eine Auftriebskraft für das gesamte flächige Element zu bewirken, die ≥ der Gravitationskraftkomponente des flächigen Elementes sein sollte.

Die Verbindung zwischen Druckgasspeicher, der eine herkömmliche Druckgasflasche sein kann, und der Druckgaskammer am flächigen Element kann über ein Ventil hergestellt und auch wieder unterbrochen werden. Das Ventil kann dabei unmittelbar am Ausgang des Druckgasspeichers, aber auch in der ersten Leitung angeordnet sein und in einfachster Form manuell geöffnet und geschlossen werden.

Es kann aber auch ein in Abhängigkeit des Innendrukes in der Druckgaskammer selbstätig schließendes Ventil, bei Erreichen eines vorgebbaren Innendruckes in der Druckgaskammer, eingesetzt werden.

Für die Rückführung von Gas aus der Druckgaskammer sollte zumindest eine zweite Leitung vorhanden sein, die in einer Alternative parallel zu der bereits erwähnten ersten Leitung verläuft und ebenfalls an die mindestens eine Druckgaskammer angeschlossen werden kann, wobei diese zweite Leitung in einen zweiten Druckgasspeicher oder in einen zweiten Anschluss des ebenfalls mit der Druckgaskammer verbundenen einen Druckgasspeichers münden kann.

Die zweite Leitung muss aber nicht zwingend unmittelbar an eine Druckgaskammer angeschlossen werden, sondern sie kann auch an die erste Leitung angeschlossen sein, wobei der Anschluss beispielsweise über ein so genanntes T-Stück an die erste Leitung erfolgen kann.

Die zweite Leitung kann aber auch einen Bypass zur ersten Leitung, um das bereits erwähnte Ventil darstellen, wobei in diesem Fall, das aus der Druckgaskammer rückgeführte Gas in den einen Druckgasspeicher gefördert werden soll.

In der Regel, zumindest in den Fällen, in denen das rückgeführte Gas in den Gasspeicher, der auch zur Befüllung der Druckgaskammer genutzt worden ist, gefördert werden soll, kann in der zweiten Leitung ein Verdichter angeordnet werden, dessen Saugseite mit dem Teil der zweiten Leitung verbunden ist, die in Richtung auf die Druckgaskammer und die Druckseite mit dem Teil der zweiten Leitung verbunden ist, die mit dem Gasspeicher in Verbindung steht.

Als Verdichter kommen die unterschiedlichsten bekannten Formen in Frage, wobei jedoch druckseitig ein Gasdruck vorliegen sollte, mit dem gewährleistet ist, dass der Gasspeicher mit dem rückgeführten Gas wieder befüllt werden kann.

In einfachsten Fällen können manuell betätigte Verdichter, wie Handpumpen oder Kolbenverdichter eingesetzt werden.

Werden zwei Gasspeicher verwendet, kann der zweite Gasspeicher, in den das Gas aus der Druckgaskammer wieder rückgeführt wird, anders dimensioniert sein, so dass in diesem ein relativ geringer Innendruck, mit dem rückgeführten Gas auftritt, wobei gegebenenfalls auf den bereits erwähnten Verdichter verzichtet werden kann.

Das in dem zweiten Druckgasspeicher zwischengespeicherte rückgeführte Gas kann so zu beliebigen Zeitpunkten mittels eines entsprechenden Verdichters aus diesem zweiten Druckgasspeicher in einen ersten Druckgasspeicher rückgeführt und höher komprimiert werden.

Die bereits erwähnte erste Leitung kann temporär zur Befüllung und Rückführung des Gases an die Druckgaskammer angeschlossen werden, wobei in diesem Fall, an einer solchen Druckgaskammer ein verschließbarer Anschlußstutzen vorhanden sein sollte.

Da die erforderlichen Innendrücke in der Druckgaskammer relativ niedrig sind, besteht aber auch die Möglichkeit, eine relativ schwach dimensionierte erste Leitung mit geringer Masse stationär an die Druckgaskammer anzuschließen, so dass die erste Leitung bei ausreichender Länge auch während der Fortbewegung des Fahrzeuges nicht vom flächigen Element getrennt werden muss.

Nicht nur in diesem Falle sollte die erste Leitung zumindest in Bereichen aus einem flexiblen Material bestehen, so dass die Handhabbarkeit erleichtert ist.

Die die Druckgaskammer und einen Druckgasspeicher verbindende erste Leitung kann aber auch, als Bypassleitung um einen Verdichter geführt sein, wobei der Gasstrom durch diese erste Leitung oder dem Verdichter mittels mindestens eines Zweiwegeventils geführt werden kann. Die zweite Leitung kann, in diesem Fall durch den Verdichter mit seinen zwei Anschlüssen gebildet sein. Die erste Leitung kann durch das Verdichtergehäuse geführt sein.

Der zumindest für die Befüllung der einen bzw. auch mehreren Druckgaskammern genutzte Druckgasspeicher sollte vor und während der Befüllung einen Gasinnendruck aufweisen, der ≥ dem erforderlichen Innendruck in der bzw. in den Druckgaskammer(n) ist, aufweisen.

Sämtliche für die Befüllung und Rückführung des Gases erforderlichen Komponenten können mit dem windangetriebenen Fahrzeug transportiert werden, so dass auch die Nachfüllung der Druckgaskammer während der Fortbewegung möglich ist. Zumindest der eine Druckgasspeicher sollte hierfür am Fahrzeug befestigt werden können, wobei die Befestigung so ausgebildet sein sollte, dass der entsprechende Druckgasspeicher zur Nachfüllung mit Gas zu einer Tankanlage getrennt vom Fahrzeug befördert werden kann.

Nachfolgend soll die Erfindung anhand von Ausführungsbeispielen näher erläutert werden.

Dabei zeigen:
- Figur 1: ein Beispiel eines an einem erfindungsgemäßen Wasserfahrzeug einsetzbaren flächigen Elementes;
- Figur 2: ein weiteres Beispiel, in Drachenform eines flächigen Elementes;
- Figur 3: eine Draufsicht auf einen Fahrzeugkörper, mit einem Beispiel für einen erfindungsgemäßen Windantrieb;
- Figur 3a: einen vergrößerten Ausschnitt X aus Figur 3;
- Figur 3b: einen Kragarm, der beim Beispiel nach Figur 3 einsetzbar ist;
- Figur 4: ein weiteres Beispiel mit einem Fahrzeugkörper, in Draufsicht;
- Figur 4a: den vergrößerten Ausschnitt Y aus Figur 4;
- Figur 4b: ein Beispiel eines zur Veränderung der Länge von Halteleinen geeigneten Elementes;
- Figur: 5 eine Draufsicht auf ein weiteres Beispiel, zur Ausführung von Führungen an einem Fahrzeugkörper;
- Figur 5a: eine Schnittdarstellung A-A aus Figur 5;
- Figur 5b: den Ausschnitt Z in Vergrößerung aus Figur 5a;
- Figur 6: ein weiteres Beispiel eines Windantriebes in Draufsicht;
- Figur 7: eine Draufsicht auf einen Fahrzeugkörper mit einem Kragarm zur Veränderung des Kraftangriffspunktes;
- Figur 7a: eine Vorderansicht auf ein Beispiel nach Figur 7;
- Figur 7b: die Vergrößerung der Ausschnitte W und W' aus Figur 7a;
- Figur 8: eine Draufsicht auf ein weiteres Beispiel eines Windantriebes;
- Figur 8a: eine Seitenansicht von Figur 8;
- Figur 9: eine schematische Darstellung eines Beispiels eines Windantriebes an einem Segelboot;
- Figur 10: eine Draufsicht auf einen schematisch dargestellten Fahrzeugkörper;
- Figur 11: drei Beispiele von Gestaltungsformen für flächige Elemente und deren mögliche Ausrichtung zum Wind;
- Figur 12: drei Beispiele für eingestellte Formen eines flächigen Elementes unter Berücksichtigung der Windstärke;
- Figur 13: eine schematische Darstellung eines flächigen Elementes mit aerodynamisch wirksamen Elementen;
- Figur 14: eine schematische Darstellung eines an einem Fahrzeugkörper angeordneten Halteleinenanschlagelementes in drei Ansichten;
- Figur 15: schematisch einen Fahrzeugkörper, der mittels einer Halteleine mit einem flächigen Element verbunden ist;
- Figur 16: ein Beispiel eines flächigen Elementes mit Druckgaskammer und einem Anschlußstutzen;
- Figur 17: in schematischer Form, den Aufbau eines Beispiels einer erfindungsgemäßen Gaszu- und -rückführung;
- Figur 18: ein zweites Beispiel einer erfindungsgemäßen Gaszufuhr und -rückführung;
- Figur 19: ein drittes Beispiel einer erfindungsgemäß zu verwendenden Gaszufuhr und -rückführung und
- Figur 20: ein Beispiel einer erfindungsgemäß zu verwendenden Gaszufuhr oder -rückführung mit zwei Gasspeichern.

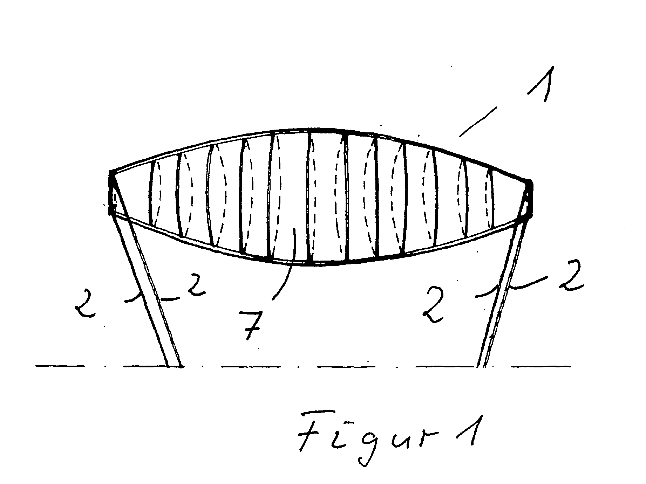

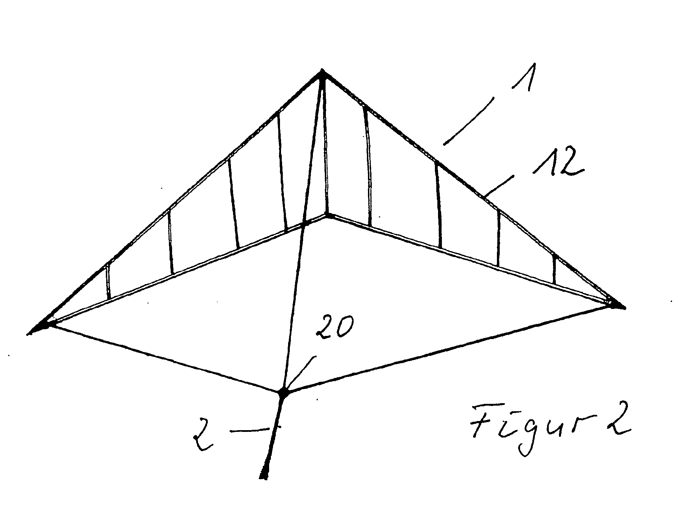

In den Figuren 1 und 2 sind zwei mögliche Beispiele für flächige Elemente 1, wie sie in Segel- bzw. auch Drachenform für einen erfindungsgemäßen Windantrieb einsetzbar sind, dargestellt.

Bei dem Beispiel nach Figur 1 ist das flächige Element 1 mit vier Halteleinen 2 am nicht dargestellten Fahrzeugkörper 3 befestigt, wobei die Länge der vier Halteleinen 2 möglichst jeweils einzeln verändert werden kann, um das flächige Element 1 in die verschiedensten Richtungen zu bewegen und entsprechend der gewünschten Fahrtrichtung bei vorhandener Windrichtung auszurichten.

Das flächige Element 1 besteht bei diesem Beispiel aus einem flexiblen Material, beispielsweise einer Folie bzw. einem textilen Gewebe, die zumindest gasdicht sind. Das zumindest 2-lagige, an den Rändern verschweißte flächige Element 1 bildet in seinem gesamten Inneren eine Druckgaskammer 7 darstellt, die z.B. mit Helium befüllt ist. Die Befüllung der Druckgaskammer 7 erfolgt unter Berücksichtigung des Kammervolumens und der Massen des flächigen Elementes 1, dessen Masse und der anteiligen Masse der Halteleinen 2 insoweit, dass eine Auftriebskraft erzeugt werden kann, die größer als die entsprechende Gravitationskraft ist, so dass das flächige Element 1 ohne weiteres in der Atmosphäre gehalten wird, wie dies die jeweilige Länge der Halteleinen 2 zulässt.

Das hier gezeigte flächige Element 1 entspricht in etwa der Kontur bzw. Querschnittsgeometrie, der eines herkömmlichen Flugzeugflügels, der zusätzlich zum statischen Auftrieb eine dynamische Auftriebskomponente durch Strömungsverhältnisse am Element 1 wirken läßt. Durch entsprechende Einstellung der Längen der vier Halteleinen 2 kann es so in den Wind ausgerichtet werden, dass ein möglichst großer Luftwiderstand, bei möglichst großer effektiv wirkender Fläche, die dem Wind entgegengehalten werden kann, erreicht wird.

Es können aber auch mehr als die hier vier dargestellten Halteleinen 2 eingesetzt werden, wobei dies wohl vorteilhaft bei großflächig dimensionierten flächigen Elementen 1 sein dürfte.

Das in Figur 2 gezeigte Beispiel eines flächigen Elementes 1 ist an die Ausführung herkömmlicher Drachen angelehnt und es ist mit lediglich einer Halteleine 2 am ebenfalls nicht dargestellten Fahrzeugkörper 3 unmittelbar gehalten. Die Halteleine 2 läuft ausgehend von einem Knoten 20 in drei einzelne Leinen, die an Eckpunkten des drachenförmigen, flächigen Elementes 1 befestigt sind, das flächige Element 1 verfügt hier über eine Rahmenkonstruktion 12, die bevorzugt aus einem leichten und stabilen Material bestehen kann. Es kann sich dabei um karbonfaserverstärkte Kunststoffe in Rohr- oder Stabform handeln, die ein textiles Gewebe entsprechend stabilisieren und in Form halten.

Die Variation der jeweiligen Länge der einen bzw. auch mehreren Halteleine(n) 2 kann auf verschiedene Art und Weise realisiert werden, wie es beispielhaft bei der nachfolgenden Beschreibung von weiteren Figuren, besser erläutert werden soll.

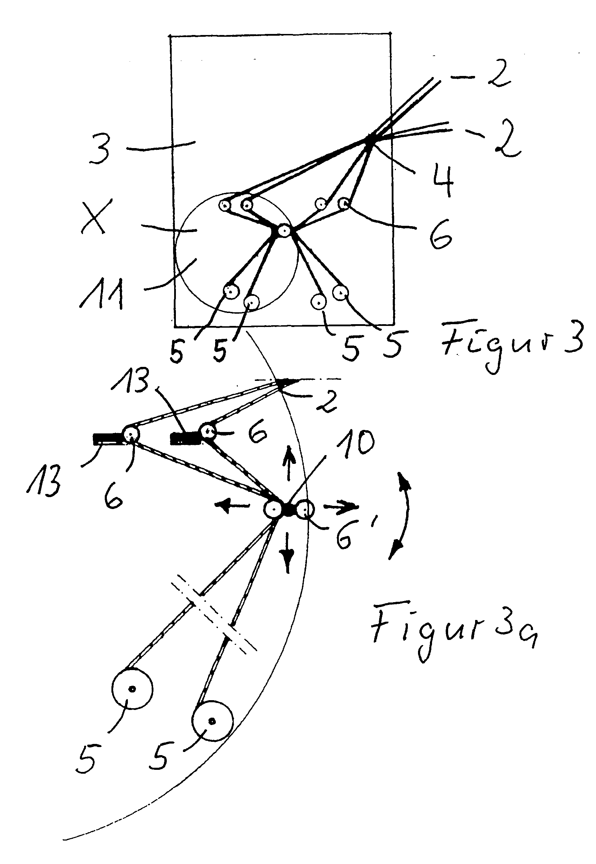

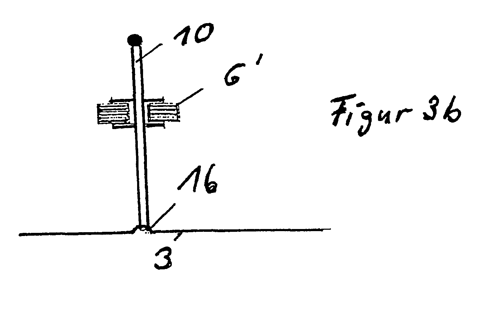

So zeigt Figur 3 mit einer Draufsicht auf einen schematisch dargestellten Fahrzeugkörper 3 eine Möglichkeit mit insgesamt vier Halteleinen 2, die jeweils individuell mit Elementen 5 in ihren wirksamen Länge zwischen Fahrzeugkörper 3 und nicht dargestelltem flächigen Element 1 verändert werden kann. Aus den in den Figuren 3, 3a und 3b gezeigten Darstellungen lassen sich mehrere Varianten durch entsprechende Erläuterung ableiten.

So können die Elemente 5, die üblicherweise wohl als Rollen ausgebildet sind, auf die die jeweiligen Halteleinen 2 auf- bzw. abgewickelt werden können und fest am Fahrzeugkörper 3 verankert sein. Von diesen Rollen 5 werden die vier Halteleinen 2 über eine Umlenkrolle 6', die hier als so genannter Viererblock oder mit zwei Doppelblöcken ausgeführt ist, über weitere vier Umlenkrollen 6 zu einem Umlenkelement, das den eigentlichen Kraftangriffspunkt 4 der Halteleinen 2 am Fahrzeugkörper 3 darstellt und von dort zum nicht dargestellten flächigen Element 1 geführt.

Der Kraftangriffspunkt 4 und das flächige Element 1 wandert dabei gezielt, entweder durch Verlängerung bzw. Verkürzung der einzelnen Halteleinen 2, infolge auf- bzw. abwickeln auf die Rollen 5 aus. Er kann aber auch dadurch auswandern, dass der Doppelblock 6' als Umlenkrollen für die Halteleinen 2 in seiner Position verändert wird. Auf beispielsweise Möglichkeiten, wie dies erreicht werden kann, soll insbesondere bei der Beschreibung der Figuren 3a und 3b noch zurückgekommen werden.

In Figur 3a ist die Einzelheit X aus Figur 3 in einer Vergrößerung gezeigt.

Dabei sind mehrere Pfeile, insbesondere am Umlenkrollensystem 6', hier als Viererblock verwendet, eingezeichnet worden, um die Möglichkeiten zur Einflußnahme auf die Lage des Kraftangriffspunktes 4 anzudeuten. So besteht die Möglichkeit, eine Verschiebung parallel und orthogonal zur Längsachse des Fahrzeugkörpers 3 vorzunehmen, wie auch eine teilkreisförmige Verschiebung, wie mit dem entsprechend geformten Doppelpfeil angedeutet, vorzunehmen. Letztgenanntes kann mit einer Anordnung auf einem Drehteller 11 erfolgen, der um eine symmetrisch angeordnete Drehachse verdrehbar ist. Das Umlenksystem 6' ist dabei auf dem Drehteller 11 exzentrisch angeordnet und bewegt sich bei Drehung des Drehtellers auf einer Kreisbahn.

Eine weitere Variante ist die Verwendung eines mit einem Gelenk 16 am Fahrzeugkörper 3 befestigten Hebel- bzw. Kragarmes 10, an dem das Umlenksystem 6' als zwei Doppelblöcke befestigt ist. Der Kragarm 10 kann selbstätig infolge Auslenkung des flächigen Elementes 1, gezielt manuell aber auch mechanisch an seinem oberen Ende entsprechend verschwenkt werden, so dass der Umlenkpunkt für die Halteleinen 2, der durch das Umlenksystem 6' vorgegeben ist, entsprechend der Bewegung des Kragarmes 10 mit auswandert.

Insbesondere in Figur 3a sind am Boden des Fahrzeugkörpers 3 verankerte Ösen 13 erkennbar, an denen die vier weiteren Umlenkrollen 6, an denen jeweils ein eine Halteleine 2 weiter umgelenkt wird, befestigt sind.

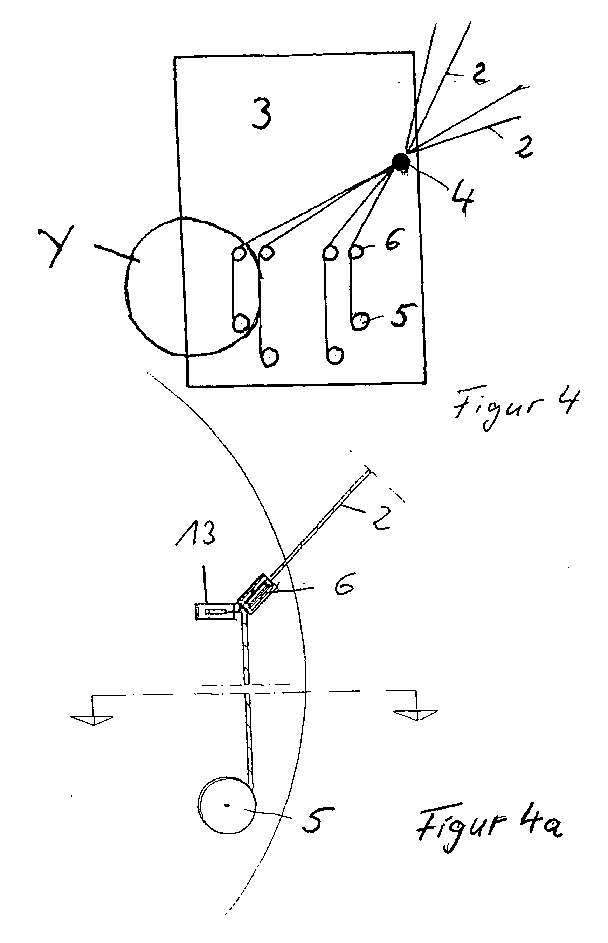

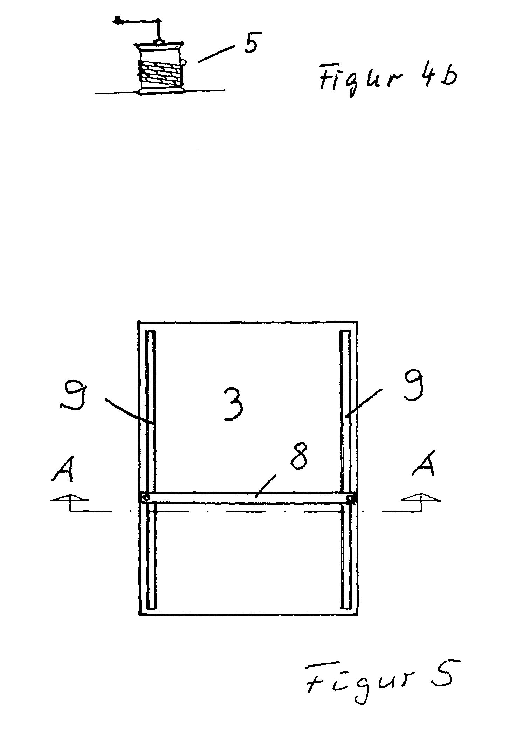

Bei dem in den Figuren 4, 4a und 4b gezeigten Beispiel einer Steuerung für einen erfindungsgemäßen Windantrieb wurden wieder vier Halteleinen 2, die an einem flächigen Element 1, das beispielsweise wie das nach Figur 1 ausgebildet sein kann, geführt und daran befestigt sind, verwendet. Jede einzelne Halteleine 2 ist über eine gesonderte Umlenkrolle 6 zu einem Element 5, mit dem die jeweilige Länge der Halteleine 2 verändert werden kann, geführt. Ein solches Element 5, kann beispielsweise, wie mit Figur 4b angedeutet, als eine herkömmliche Winsch, wie sie an Segelbooten bzw. -schiffen verwendet wird, ausgebildet sein und über einen Freilauf und Bremse verfügen. Zusätzlich kann eine Kurbel angesetzt sein, mit der die jeweilige Halteleine auf- bzw. abgewickelt werden kann.

Der Kraftangriffspunkt 4 für die vier Halteleinen 2 am Fahrzeugkörper 3 kann durch ein Umlenksystem, beispielsweise einen in der Segelsprache üblicherweise als Viererblock bezeichnetes Rollensystem gebildet sein und dessen Lage durch Längenvariation der vier Halteleinen 2, unter Berücksichtigung der gewünschten Fahrt- und der vorhandenen Windrichtung verändert werden.

Die vergrößerte Darstellung des Ausschnittes Y in Figur 4a macht deutlich, dass auch hier Ösen 13 am Boden des Fahrzeugkörpers 3 verankert sind, und für den Halt der Umlenkrollen 6 dienen.

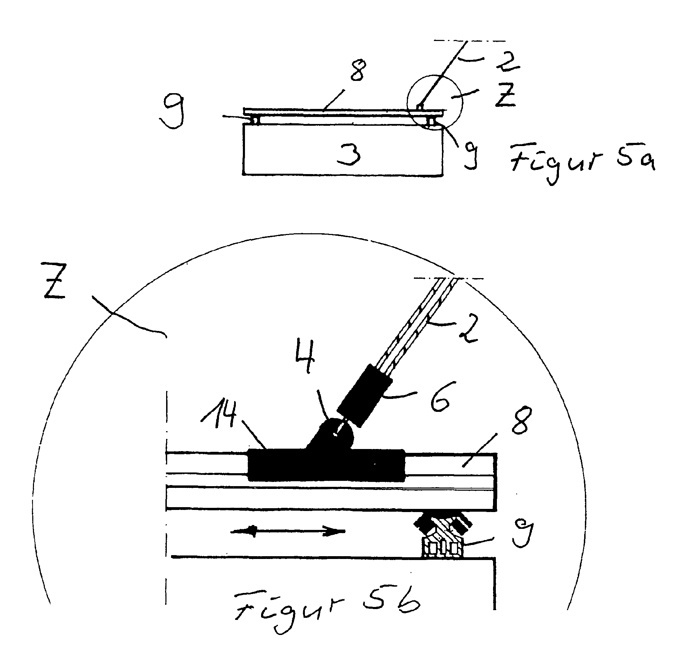

Bei den Beispielen gemäß Figur 5, 5a und 5b werden Führungen 8 und 9 eingesetzt, um die Position des Kraftangriffspunktes 4 in Bezug zur Längs- und Querachse des Fahrzeugkörpers 3 zu variieren.

So sind zwei Längsführungen 9, die parallel zur Längsachse des Fahrzeugkörpers 3 ausgerichtet, an den Rändern des Fahrzeugkörpers 3 angeordnet. In diesen Längsführungen 9 ist eine Querführung 8 gehalten und geführt, so dass sie bei Bedarf über die gesamte Länge des Fahrzeugkörpers 3 verschoben werden kann.

Es kann aber auch nur eine der Führungen 8 oder 9 eingesetzt werden.

Wie in der Schnittdarstellung 5a entlang des Schnittes A-A erkennbar, sind die eine aber auch mehrere Halteleinen 2 zu Umlenkrollen 6, die an einem auf der Querführung 8 geführten Führungselement 14 oder auch unmittelbar zu diesem Führungselement 14, unter Verzicht der Umlenkrollen 6 geführt und dort befestigt.

Wie in der vergrößerten Ausschnittsdarstellung Z in Figur 5b besser erkennbar, kann das Führungselement 14 entlang der Querführung 8, an der es formschlüssig geführt und gehalten ist, wie mit Doppelpfeil angedeutet, hin- und herbewegt werden, so dass sich der Kraftangriffspunkt 4 orthogonal zur Längsachse des Fahrzeugkörpers 3, durch Verschiebung des Führungselementes 14 verändern lässt. Wird nun die Querführung 8 entlang der Längsführungen 9 verschoben, ist eine weitere Variation der Lage des Kraftangriffspunktes 4 erreichbar.

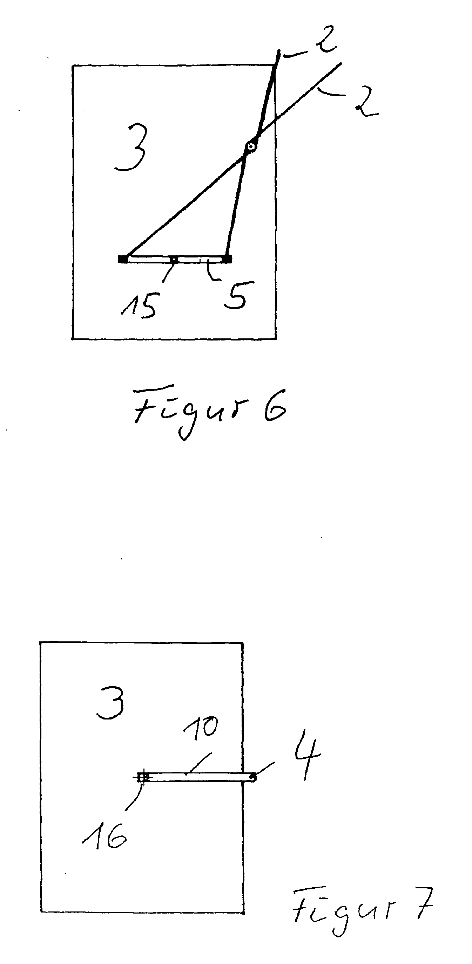

Bei dem in Figur 6 gezeigten Beispiel einer Möglichkeit zur Veränderung der wirksamen Länge der Halteleinen 2 zwischen Fahrzeugkörper 3 und ebenfalls nicht dargestelltem flächigen Element 1, wurde ein Doppelhebel 5, an dessen Enden jeweils eine Halteleine 2 befestigt ist, verwendet. Der Doppelhebelarm 5 ist dabei um eine Drehachse 15 verdrehbar, so dass je nach Verdrehwinkel des Doppelhebels 5 um die Drehachse die rechte bzw. linke Halteleine 2, entweder verlängert oder verkürzt werden kann. Die Halteleinen sind um jeweils eine Umlenkrolle 6, die hier als Doppelblock ausgebildet sein kann, zum flächigen Element 1 geführt. Dabei kann dieses Umlenkrollensystem 6, den Kraftangriffspunkt 4 darstellen.

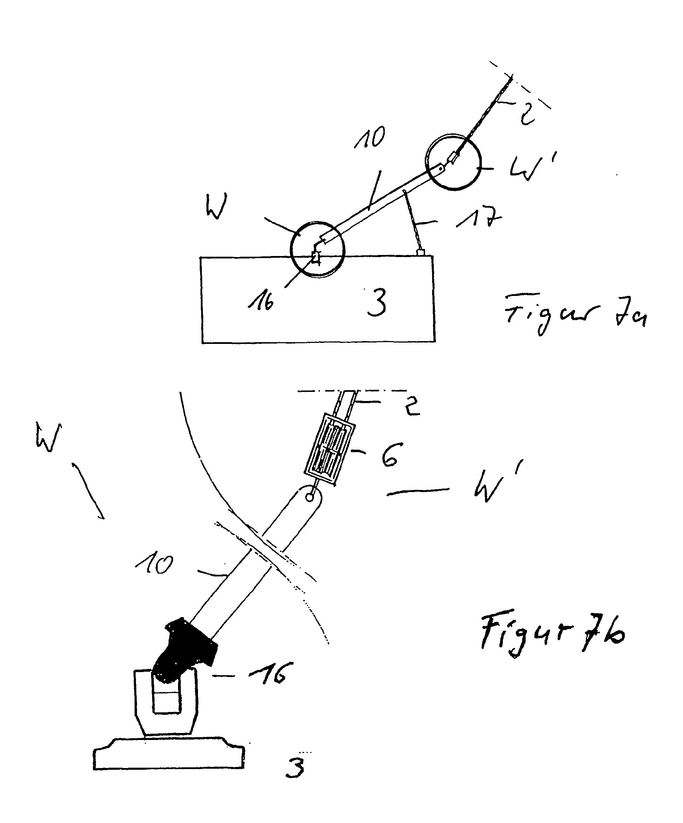

Bei dem in den Figuren 7, 7a und 7b gezeigten Beispiel wird ein Kragarm 10, der mit einem Gelenk 16 am Fahrzeugkörper 3 befestigt ist, zur Veränderung der Position des Kraftangriffspunktes 4 für die Halteleinen 2 verwendet.

Das Gelenk 16 ist bevorzugt ein Kugel- bzw. ein Kardangelenk, mit dem der Kragarm 10 in die verschiedensten Richtungen verschwenkt werden kann.

Die Halteleinen 2 sind am entgegengesetzten Ende des Kragarmes 10 in Bezug zum Gelenk 16 angeschlagen, wobei der Kragarm 10 eine Länge aufweisen kann, die über die maximale Ausdehnung des Fahrzeugkörpers 3 hinausragen kann. So kann durch günstigere Hebelverhältnisse das Kippmoment weiter reduziert werden.

Wie in Figur 7a angedeutet, kann der Kragarm 10 mit mindestens einem, bevorzugt zwei (entgegen der Darstellung) Seilsysteme, in Form von Schoten, wie solche Elemente in der Segelsprache üblicherweise bezeichnet werden, gehalten und ausgerichtet werden.

In Figur 7b sind die Ausschnitte W und W' aus Figur 7a dargestellt, um die Ausbildung des Gelenkes 16, mit ihrer Arretierung am Fahrzeugkörper 3 und den Anschlag der Halteleinen 2 am Kragarm 10 zu verdeutlichen.

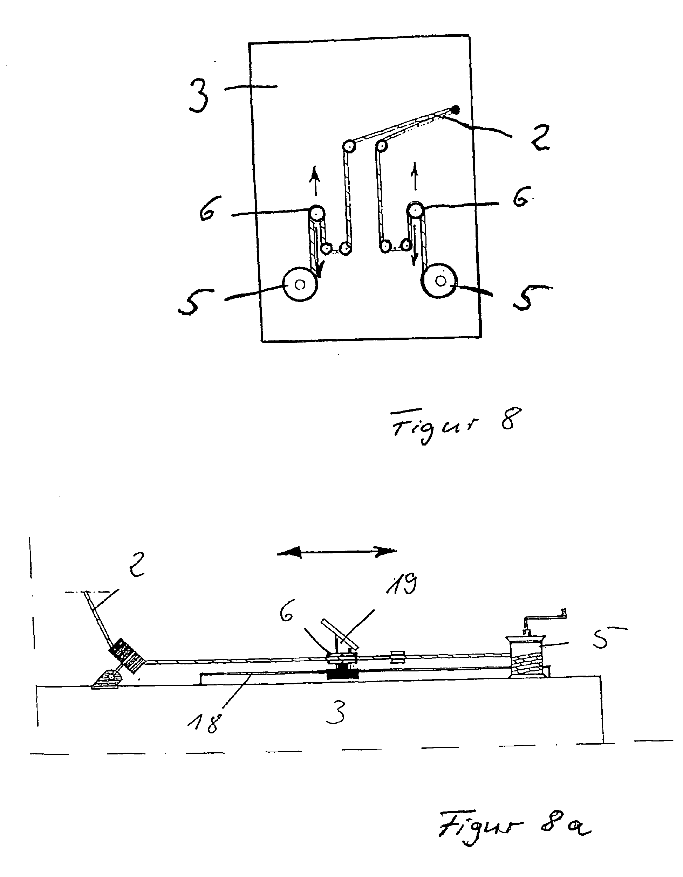

Bei dem in den Figuren 8 und 8a gezeigten Beispiel für eine Möglichkeit zur Variation der Länge von Halteleinen 2, bestehen prinzipiell zwei Alternativen zur Beeinflussung der wirksamen Längen der einzelnen Halteleinen 2, die gemeinsam aber auch einzeln durchgeführt und benutzt werden können.

So ist jede, der hier zwei Halteleinen 2 auf einer Rolle 5, als "Winsch" aufgewickelt und über ein Umlenkrollensystem, bestehend aus jeweils hier vier, zumindest jedoch zwei Umlenkrollen 6 geführt.

Wie in der Draufsicht nach Figur 8 deutlich gemacht, können zumindest zwei der Umlenkrollen 6 translatorisch hin und her verschoben werden.

Wie in der Seitenansicht nach Figur 8a deutlich erkennbar, sind diese Umlenkrollen 6 gemeinsam mit jeweils einem Pedal 19 an einer Führung 18 formschlüssig geführt und gehalten. Werden die Pedale 19 translatorisch entlang der Führung 18, die am Fahrzeugkörper 3 befestigt ist, entweder vor oder zurück bewegt, wird die wirksame Länge der jeweiligen Halteleine 2 entsprechend verkürzt oder verlängert.

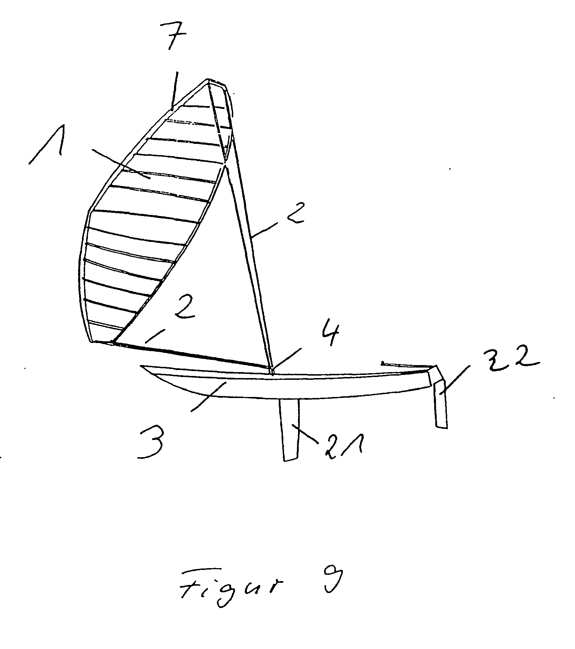

In Figur 9 ist ein Segelboot mit einem Schiffsrumpf als Fahrzeugkörper 3, mit einem Schwert 21 und einem herkömmlichen Ruder 22 dargestellt. Vier Halteleinen 2 sind am Fahrzeugkörper 3 angeschlagen und an den jeweils anderen Enden mit einem flächigen Element 1 in Form eines textilen Segels befestigt. Am Rand dieses segelförmigen, flächigen Elementes 1 ist eine umlaufende Druckgaskammer 7, die auch aus mehreren voneinander getrennten Einzelkammern bestehen kann, ausgebildet, in der komprimiertes Gas enthalten ist. Eine solche Druckgaskammer 7 erfüllt eine Rahmen- und Stabilisierungsfunktion für ein flexibles flächiges Element 1. Die Stabilität kann, wie angedeutet, mit zusätzlichen stabförmigen Elementen bzw. auch durch eine entsprechende Kammergestaltung weiter erhöht werden.

Die Länge der vier Halteleinen kann in verschiedenster Form, beispielsweise mit einem der bereits vorab beschriebenen Systeme verändert werden.

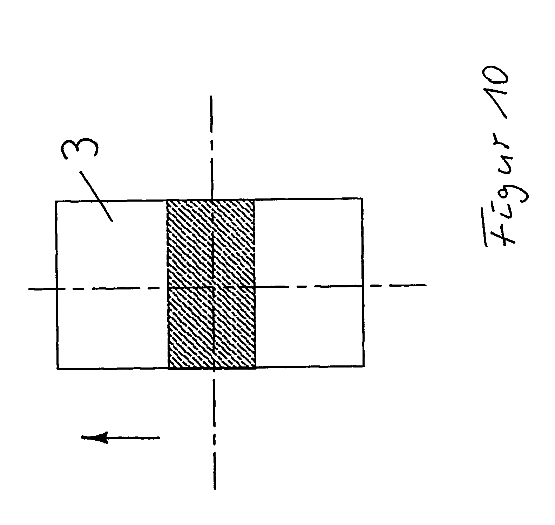

In der Figur 10 ist schematisch eine Draufsicht auf einen Fahrzeugkörper 3 für ein Beispiel eines erfindungsgemäßen Wasserfahrzeuges gezeigt. Dabei stellt der schraffierte Bereich, der über die gesamte Breite des Fahrzeugkörpers 3 und gegebenenfalls auch darüber hinaus reichen kann und hier im Bereich der eingezeichneten Querachse des Fahrzeugkörpers 3 angeordnet ist, die Fläche dar, in der der Kraftangriffspunkt beispielsweise mit Hilfe von Führungen 8 und 9, wie sie in den Figuren 5a und 5b gezeigt sind, positioniert werden kann, um die Krängung zu minimieren und optimale Fortbewegungsgeschwindigkeit erreichen zu können. Dieser Bereich kann aber auch kreisförmig sein, wenn ein Drehteller oder ein Kragarm 10 verwendet werden.

Die durch entsprechende Positionierung des Kraftangriffspunktes erreichbaren Effekte, sind im allgemeinen Teil der Beschreibung erwähnt.

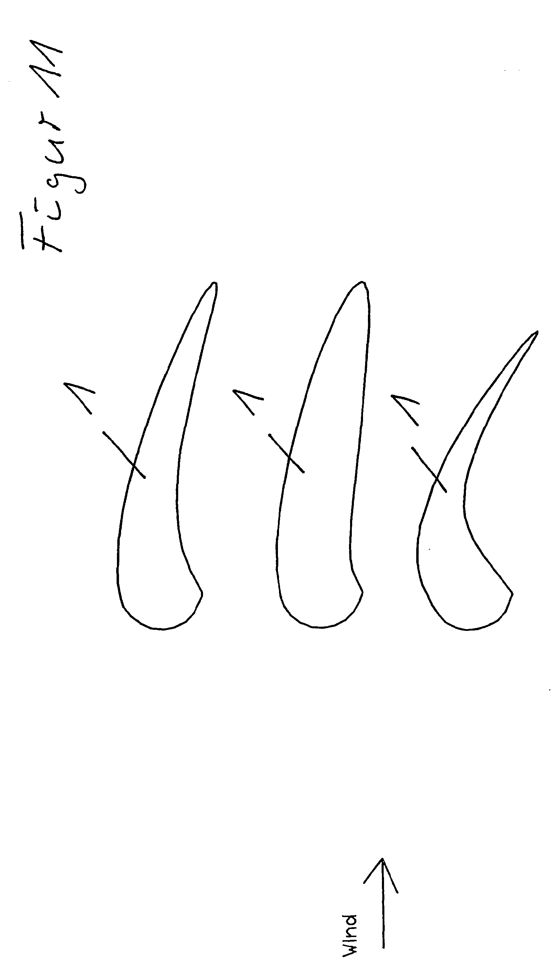

In der Figur 11 sind drei Beispiele für Gestaltungsformen der flächigen Elemente dargestellt, wobei hier die einzelnen Querschnitte erkennbar sind. Bei diesen Beispielen lehnt sich die Gestaltung der flächigen Elemente 1 an die von Flugzeugflügeln bekannten Formen an und so ausgebildete flächige Elemente 1, können wie in Figur 11 dargestellt, in Bezug zum Wind ausgerichtet werden, so dass mit dem Wind eine Auftriebskomponente an diesen flächigen Elementen 1 erzeugt wird, die über die hier nicht dargestellten Halteleinen 2 für den Vortrieb des Wasserfahrzeuges genutzt werden kann. Durch die unterschiedlichen Gestaltungen, wie sie in Figur 11 gezeigt sind, lassen sich durch die entsprechend geänderten Strömungsverhältnisse unterschiedliche Vortriebskräfte, die am Kraftangriffspunkt als Zugkraft wirken, realisieren.

Werden flächige Elemente 1 in Gestaltungsformen, wie sie in Figur 11 gezeigt sind, verwendet, spielt neben dem Cw-Wert auch der sogenannte Ca-Wert (Auftriebswert eines Profils) eine Rolle und gerade der Ca-Wert sollte in diesen Fällen groß und den entgegengesetzt dem Luftwiderstand klein gehalten sein.

Durch Beeinflussung der dreidimensionalen Form mit dem Profil können die Position, die aerodynamischen Eigenschaften und demzufolge auch die wirkende Kräfte mit den entsprechend auftretenden Ca- und Cw-Werten beeinflusst werden.

Während der Fahrt des Wasserfahrzeuges kann die Gestalt der flächigen Elemente 1 auch durch Veränderung des Innendruckes in den Druckgaskammern 7 beeinflusst werden.

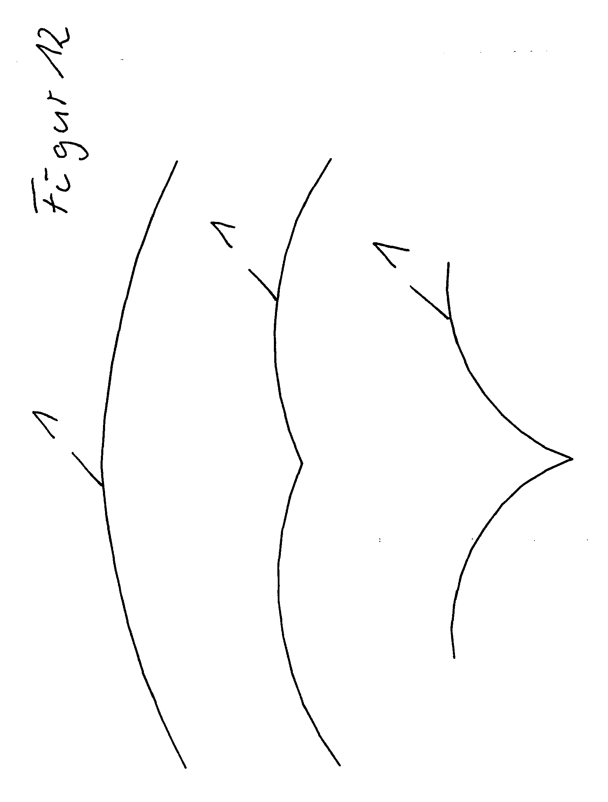

In der Figur 12 sind weitere drei Beispiele für eingestellte Formen eines flächigen Elementes 1, die beispielsweise durch Variation der Länge einzelner Halteleinen 2 eingestellt werden können und mit denen unterschiedlich große Windstärken berücksichtigt werden können, gezeigt.

So kann die oben dargestellte Form bei kleinen bis mittleren Windstärken eingehalten werden, um mittels dieser Form aerodynamische Verhältnisse einzuhalten, mit denen ein maximaler Vortrieb erreicht werden kann.

Bei einer Einstellung der Form eines flächigen Elementes 1, wie es in der mittleren Darstellung gezeigt ist, kann die Vortriebskraft bei größeren Windstärken reduziert werden und bei sehr hohen Windstärken, wie sie beispielsweise bei Böen auftreten können, führt eine Veränderung der Form des flächigen Elementes 1, wie sie in der unteren Darstelltung von Figur 12 gezeigt ist, dazu, dass die Vortriebskraft gegen 0 reduziert wird und demzufolge auch eine sehr geringe Zugkraft am Kraftangriffspunkt auftritt. Eine solche Gestaltung kann auch in anderen Gefahrensituationen, beispielsweise mit Hilfe der bereits im allgemeinen Teil der Beschreibung genannten mindestens einen Sensorleine eingestellt werden.

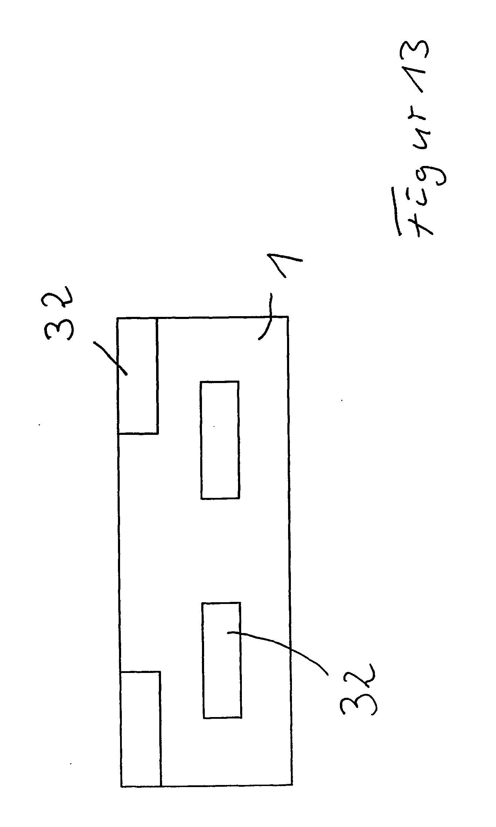

Die Figur 13 zeigt in schematischer Form ein flächiges Element 1 mit insgesamt vier aerodynamisch wirksamen verschwenkbaren Elementen 32, die einzeln oder gemeinsam verschwenkt werden können, so dass sie ähnlich wie von Fluzeugen her bekannte Klappen und Leitwerke agieren können, um bei Einstellung eines bestimmten Schwenkwinkels in Bezug zur Oberfläche des flächigen Elementes 1 zur gezielten Bewegung des flächigen Elementes 1 in vertikaler und horizontaler Richtung benutzt werden können. An diesen Elementen 32 können beispielsweise entsprechende Leinen befestigt sein, mit denen der Anstellwinkel eingestellt werden kann. In den Fällen, in denen diese Elemente 32 flächig am übrigen Teil des flächigen Elementes 1 anliegen, sind sie wirkungslos.

Mit diesen aerodynamisch wirksamen Elementen 32 kann das Ca/CW Verhältnis ebenfalls beeinflusst werden, um den Vortrieb in der jeweils gewünschten Form zu manipulieren.

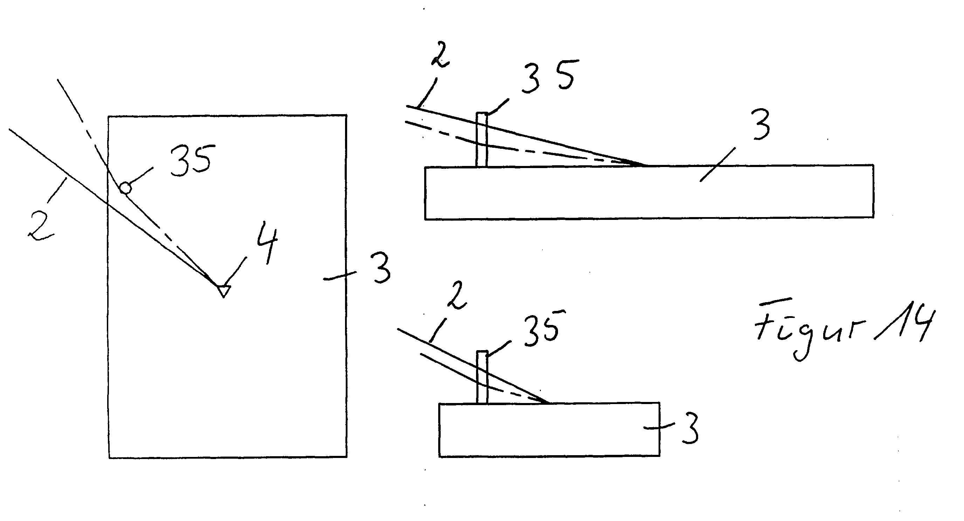

Mit der Figur 14 soll in schematischer Form, die Wirkung und Funktion von Halteleinenanschlagselementen 35 verdeutlicht werden. Dabei wurde lediglich ein solches Element 35, das stabförmig am Fahrzeugkörper 3 vorhanden ist, mit seiner Wirkung und Funktion für lediglich eine Halteleine 2 veranschaulicht. Mit den durchgezogenen Linien ist eine Halteleine 2 dargestellt, wenn das flächige Element 1 so in den Wind gestellt ist, dass das Wasserfahrzeug auf dem gewünschten Kurs liegt, also in die gewünschte Fahrtrichtung fortbewegt wird. Wandert nun aber das flächige Element 1 aus, bewegt sich die entsprechende Halteleine 2 zwangsläufig mit und berührt das Halteleinenanschlagselement 35 und die Auswanderbewegung wird entsprechend begrenzt, was zu einer Bewegung des flächigen Elementes 1 in die entgegengesetzt dazu gerichtete Richtung zwangsläufig führt, ohne dass manuell oder mittels einer anderen Steuermöglichkeit eingegriffen werden muss.

Selbstverständlich können in nicht dargestellter Form mehrere solcher Halteleinenanschlagselemente 35 vorhanden sein. Diese können auch paarweise für jeweils eine Halteleine 2 eingesetzt werden, um die Auswanderbewegung des flächigen Elementes 1 in zwei Richtungen zu begrenzen.

Halteleinenanschlagselemente 35 können aber auch, wie im allgemeinen Teil der Beschreibung bereits erwähnt, bügelförmig ausgebildet sein.

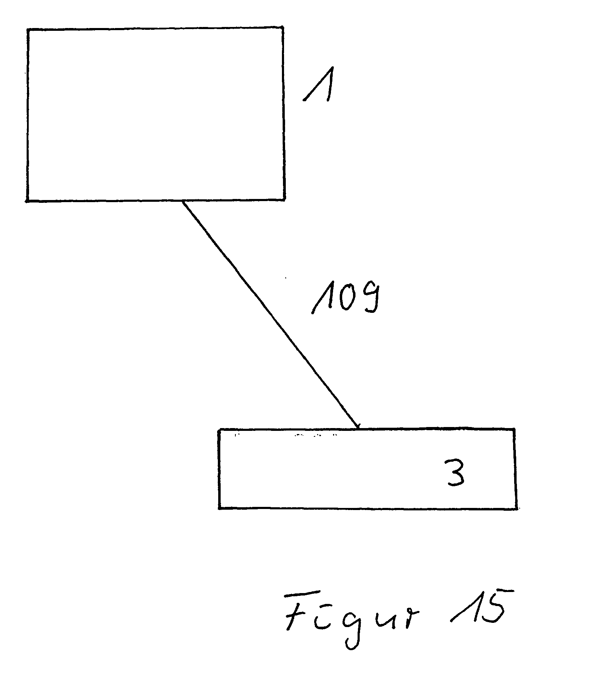

In Figur 15 ist in stark vereinfachter Form ein windangetriebenes Fahrzeug 3 gezeigt, bei dem ein flächiges Element 1, ähnlich wie ein Drachen über mindestens eine Halteleine 100 miteinander verbunden sind, so dass die am flächigen Element 1 angreifenden Windkräfte für den Vortrieb des Fahrzeugkörpers 3 genutzt werden können.

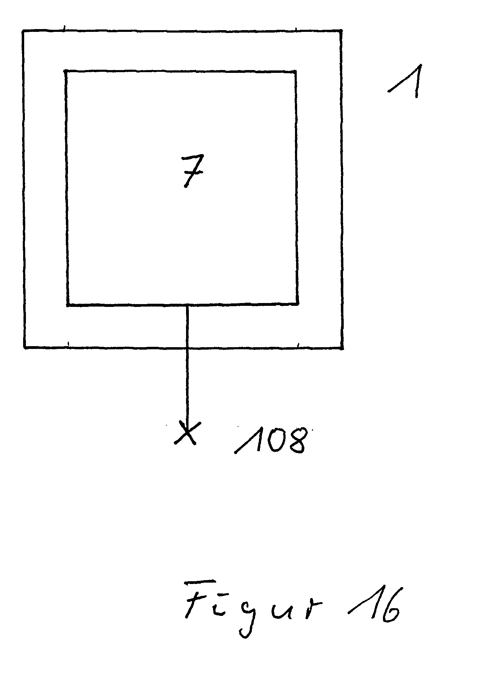

In der Figur 16 ist ein flächiges Element 1 mit einer Druckgaskammer 7 dargestellt, die über einen Anschlußstutzen 108 verfügt. An den Anschlußstutzen 108 kann eine Leitung 111 angeschlossen werden, über die die Druckgaskammer 7 mit einem Gas befüllt werden kann, wobei es sich bei dem Gas bevorzugt um Helium handelt, so dass mit Hilfe der gefüllten Druckgaskammer 7 eine Auftriebskomponente erzielt werden kann, die ausreicht um die Gravitationskraft, die auf das flächige Element 1 wirkt, auszugleichen.

Der Anschlußstutzen 108 kann beispielsweise in Form eines herkömmlichen Schnellverschlusses ausgebildet sein und er sollte nach der Befüllung der Druckgaskammer 7 verschlossen werden können, so dass die erste Leitung 111 (hier nicht dargestellt) nach dem Befüllen der Druckgaskammer 7 vom Anschlußstutzen 108 wieder gelöst werden kann und die Verbindung erst wieder hergestellt wird, wenn das Gas aus der Druckgaskammer 7 wieder rückgeführt werden soll.

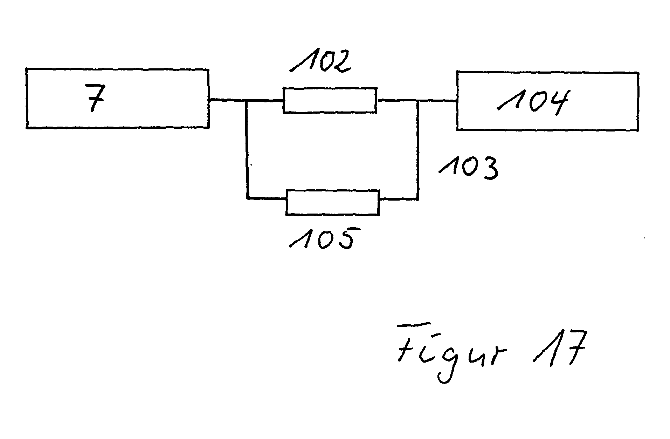

In der Figur 17 ist in schematischer Form ein Beispiel gezeigt, wie aus einem Druckgasspeicher 104 komprimiertes Gas nach Öffnen des Ventiles 102, das in einer ersten Leitung 111 angeordnet ist, in die Druckgaskammer 7 des flächigen Elementes 1 geführt werden kann. Dabei ist das in der zweiten Leitung 103, die in Form eines Bypasses um das Ventil 102 gelegt ist, angeordnete Ventil 105 geschlossen.

Für die Rückführung des Gases aus der Druckgaskammer 7 in den Druckgasspeicher 104 wird das Ventil 102 geschlossen und das Ventil 105 in der zweiten Leitung 103 geöffnet, wobei bevorzugt eine Druckkraft auf die Druckgaskammer 7 ausgeübt werden kann, um die Rückführung des Gases aus der Druckgaskammer 7 in den Druckgasspeicher 104 zumindest zu unterstützen.

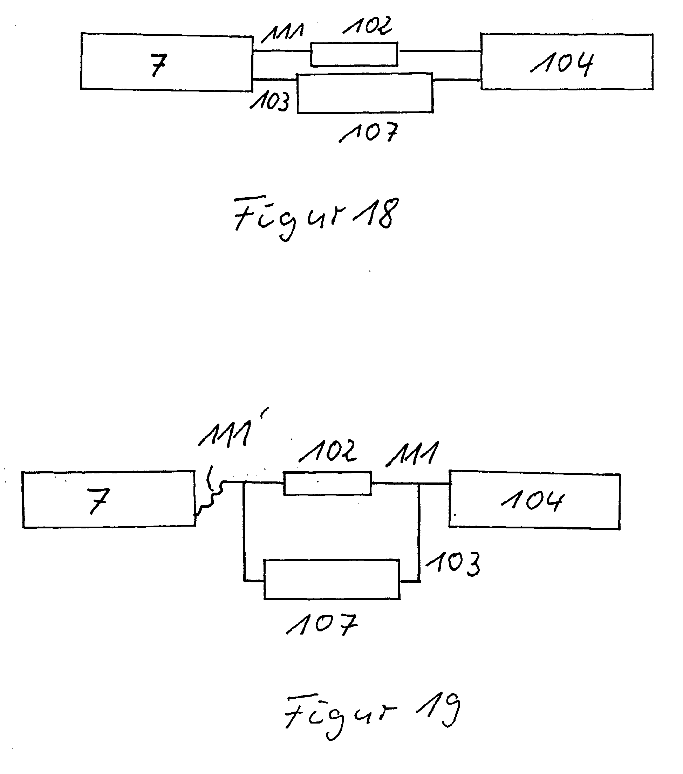

In Figur 18 ist ein weiteres Beispiel der Gaszu- und -rückführung aus einem Druckgasspeicher 104 in eine Druckgaskammer 7 und umgekehrt dargestellt. Hier sind zwei Leitungen 111 und 103 parallel zueinander an den Druckgasspeicher 104 und die Druckgaskammer 7 angeschlossen. Das im Druckgasspeicher 104 komprimiert enthaltene Gas kann nach Öffnen des Ventiles 102 in die Druckgaskammer 7 gelangen und dort mit erhöhtem Druck zwischengespeichert und für den Auftrieb des flächigen Elementes 1 genutzt werden.

Wenn die Druckgaskammer 7 entleert werden soll, wird entweder die Verbindung über die Leitung 111 getrennt, wobei dies durch Schließen des Ventiles 102 erfolgen kann und gleichzeitig der Verdichter 107, der mit seiner Saugseite druckgaskammerseitig angeschlossen ist, eingeschaltet und das Gas aus der Druckgaskammer 7 in den Druckgasspeicher 104 gepumpt werden.

Das Beispiel gemäß Figur 19 ist gegenüber dem Beispiel nach Figur 18, dahingehend modifiziert, dass die Leitung 103, als Bypassleitung um das Ventil 102 ausgebildet ist. In nicht dargestellter Form können aber auch, wie im allgemeinen Teil der Beschreibung bereits erläutert, Ventil 102 und Verdichter 107 sowie Leitung 111 und 103 vertauscht werden.

In Figur 19 ist außerdem angedeutet, dass zumindest ein Bereich 111' der ersten Leitung 111 flexibel ausgebildet sein kann.

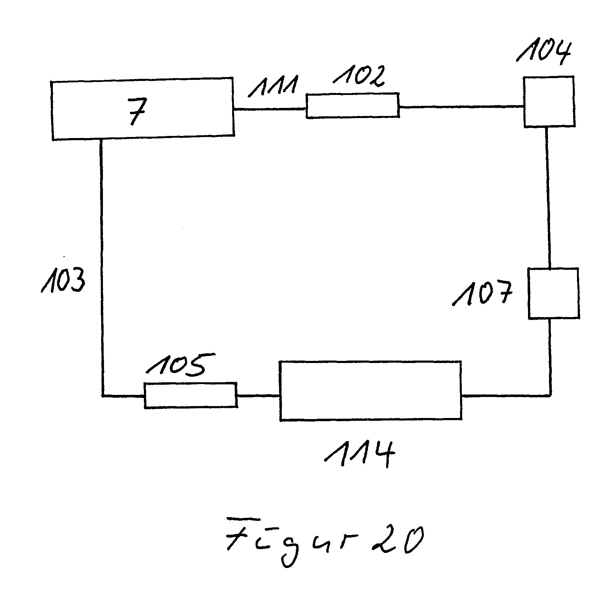

In Figur 20 ist ein Beispiel einer Gaszufuhr- und -rückführeinrichtung mit zwei Druckgasspeichern 104 und 114 gezeigt.

Dabei handelt es sich um einen Druckgasspeicher 104, mit höherem Innendruck, aus dem nach Öffnung des Ventiles 102 in der ersten Leitung 111 die Druckgaskammer befüllt werden kann.

Bei geschlossenem Ventil 102 und geöffnetem Ventil 105 in der zweiten Leitung, kann das in der Druckgaskammer 7 entsprechend komprimierte Gas in den zweiten Druckgasspeicher 114 rückgeführt und dort mit relativ niedrigem Druck zwischengespeichert werden, wobei das Innenvolumen des Druckgasspeichers 114 bevorzugt relativ groß gegenüber dem des Druckgasspeichers 104 sein kann. Aus diesem Druckgasspeicher 114 kann im Nachgang, zu einem geeigneten Zeitpunkt nach Einschalten des Verdichters 107, der mit seiner Saugseite an den Druckgasspeicher 114 und mit seiner Druckseite an den Druckgasspeicher 104 angeschlossen ist, das zwischengespeicherte Gas aus dem Niederdruckgasspeicher 114 in den Druckgasspeicher 104 komprimiert und rückgewonnen werden.

## Patentansprüche

1. Windangetriebenes Wasserfahrzeug mit einem flächigen Element, das mit einer Halteleine unmittelbar am Fahrzeugkörper gehalten und die Halteleine an mindestens drei in einem Abstand voneinander angeordneten Punkten am flächigen Element (1) befestigt ist und wobei der Kraftangriffspunkt (4) der Halteleine am Fahrzeugkörper (3) in Abhängigkeit von Wind- und Fahrtrichtung veränderbar ist, **dadurch gekennzeichnet, dass** die aerodynamischen Eigenschaften des flächigen Elements veränderbar sind.

2. Wasserfahrzeug nach Anspruch 1, **dadurch gekennzeichnet, dass** am flächigen Element (1) mindestens eine zum Fahrzeugkörper (3) geführte Steuerleine befestigt ist.

3. Wasserfahrzeug nach Anspruch 2, **dadurch gekennzeichnet, dass** zwei Steuerleinen vorgesehen sind, die an äußeren Rändern des flächigen Elements befestigt sind.

4. Wasserfahrzeug nach Anspruch 1, **dadurch gekennzeichnet, dass** das flächige Element mit Hilfe einer Halteleinensteuerung so ausrichtbar und in den Wind stellbar ist, dass es in vertikaler Richtung nach oben bzw. unten in Windschichten mit höheren Windgeschwindigkeiten bewegbar ist.

5. Wasserfahrzeug nach einem der Ansprüche 1 bis 4, **dadurch gekennzeichnet, dass** am flächigen Element mindestens eine Druckgaskammer (7) ausgebildet und/oder daran befestigt ist, mit der die Form und Gestalt des flächigen Elements veränderbar ist.

6. Wasserfahrzeug nach Anspruch 5, **dadurch gekennzeichnet, dass** die Druckgaskammer(n) (7) mit komprimiertem Gas geringerer Dichte als Luft befüllt ist/sind.

7. Wasserfahrzeug nach Anspruch 5 oder 6, **dadurch gekennzeichnet, dass** an der/den Druckgaskammer(n) (7) Öffnungen, zur den Staudruck von Wind nutzenden Befüllung, vorhanden sind.

8. Wasserfahrzeug nach einem der Ansprüche 5 bis 7, **dadurch gekennzeichnet, dass** die Druckgaskammer(n) (7) am Rand des flächigen Elements (1) ausgebildet ist/sind.

9. Wasserfahrzeug nach einem der Ansprüche 5 bis 8, **dadurch gekennzeichnet, dass** die Auftriebskraft der Druckgaskammer(n) (7) ≥ der Gewichtskraft des flächigen Elements (1) ist.

10. Wasserfahrzeug nach einem der Ansprüche 5 bis 9, **dadurch gekennzeichnet, dass** die mindestens eine Druckgaskammer (7) mittels einer ersten Leitung (111) und einem Ventil (102) mit mindestens einem Druckgasspeicher (104) verbindbar und die Druckgaskammer (7) aus dem Gasspeicher (104) befüllbar ist.

11. Wasserfahrzeug nach Anspruch 10, **dadurch gekennzeichnet, dass** eine an die Druckgaskammer (7) anschließbare oder an die erste Leitung (111) angeschlossene zweite Leitung (103) zur Rückführung von Gas aus der Druckgaskammer (7) in den mindestens einen oder einen zweiten Druckgasspeicher (104, 114) vorhanden sind.

12. Wasserfahrzeug nach Anspruch 10 oder 11, **dadurch gekennzeichnet, dass** zumindest die erste Leitung (111) bereichsweise flexibel ausgebildet ist.

13. Wasserfahrzeug nach einem der Ansprüche 10 bis 12, **dadurch gekennzeichnet, dass** ein Verdichter (107) in die zweite Leitung (103) zwischengeschaltet ist.

14. Wasserfahrzeug nach einem der Ansprüche 10 bis 13, **dadurch gekennzeichnet, dass** im ersten Gasspeicher (104) ein Druck des komprimierten Gases vorliegt, der ≥ dem Innendruck in der Druckgaskammer (7) ist.

15. Wasserfahrzeug nach einem der Ansprüche 10 bis 14, **dadurch gekennzeichnet, dass** der Verdichter (107) mit seiner Saugseite an die Druckgaskammer (7) und mit der Druckseite an einen Druckgasspeicher (104, 114) in der zweiten Leitung (103) angeordnet ist.

16. Wasserfahrzeug nach einem der Ansprüche 10 bis 15, **dadurch gekennzeichnet, dass** die zweite Leitung (103) mit dem Verdichter (107) in Form einer Bypassleitung um ein Ventil (102) an die erste Leitung (111) angeschlossen ist.

17. Wasserfahrzeug nach einem der Ansprüche 10 bis 15, **dadurch gekennzeichnet, dass** die erste Leitung (111) als Bypassleitung um einen Verdichter (107) geführt und in der ersten Leitung (111) ein Zweiwegeventil angeordnet ist.

18. Wasserfahrzeug nach einem der Ansprüche 10 bis 17, **dadurch gekennzeichnet, dass** die Druckgaskammer (7) und Druckgasspeicher (104) mit einem Gas, das eine geringere Dichte als Luft aufweist, befüllt sind.

19. Wasserfahrzeug nach einem der Ansprüche 10 bis 18, **dadurch gekennzeichnet, dass** der mindestens ein Druckgasspeicher (104, 114) am Fahrzeug befestigbar ist.

20. Wasserfahrzeug nach einem der Ansprüche 10 bis 18, **dadurch gekennzeichnet, dass** an der Druckgaskammer (7) mindestens ein verschließbarer Anschlussstutzen (108) für die erste Leitung (111) vorhanden ist.

21. Wasserfahrzeug nach einem der Ansprüche 1 bis 20, **dadurch gekennzeichnet, dass** am flächigen Element (1) mindestens ein aerodynamisch wirksam verschwenkbares Element (32) vorhanden ist.

22. Wasserfahrzeug nach einem der Ansprüche 1 bis 21, **dadurch gekennzeichnet, dass** das flächige Element (1) aus einem flexiblen Material besteht.

23. Wasserfahrzeug nach einem der Ansprüche 1 bis 22, **dadurch gekennzeichnet, dass** die Halteleine (2) mit einem Element (5) zur Veränderung der Länge der Halteleine(n) (2) zwischen flächigem Element (1) und Fahrzeugkörper (3) am Fahrzeugkörper (3) gehalten ist.

24. Wasserfahrzeug nach einem der Ansprüche 1 bis 23, **dadurch gekennzeichnet, dass** der Kraftangriffspunkt (4) entlang einer am Fahrzeugkörper (3) befestigten Führung (8, 9) veränderbar ist.

25. Wasserfahrzeug nach einem der Ansprüche 1 bis 23, **dadurch gekennzeichnet, dass** der Kraftangriffspunkt (4) exzentrisch auf einem am Fahrzeugkörper (3) befestigten Drehteller (11) angeordnet ist.

26. Wasserfahrzeug nach einem der Ansprüche 1 bis 23, **dadurch gekennzeichnet, dass** der Kraftangriffspunkt (4) an einem verschwenkbaren am Fahrzeugkörper (3) befestigten Kragarm (10) angeordnet ist.

27. Wasserfahrzeug nach einem der Ansprüche 1 bis 26, **dadurch gekennzeichnet, dass** der Kraftangriffspunkt (4) in Bezug zum Lateraldruckpunkt des Fahrzeugkörpers (3) veränderbar ist.

28. Wasserfahrzeug nach einem der Ansprüche 1 bis 27, **dadurch gekennzeichnet, dass** der Kraftangriffspunkt (4) in Bezug zur Längsachse des Wasserfahrzeuges parallel und/oder orthogonal veränderbar ist.

29. Wasserfahrzeug nach einem der Ansprüche 1 bis 28, **dadurch gekennzeichnet, dass** die Länge der Halteleine (2) veränderbar ist.

30. Wasserfahrzeug nach einem der Ansprüche 1 bis 29, **dadurch gekennzeichnet, dass** die Halteleine (2) über mindestens eine Umlenkrolle (6) geführt ist.

31. Wasserfahrzeug nach Anspruch 30, **dadurch gekennzeichnet, dass** die Umlenkrolle(n) (6) verschiebbar ist/sind.

32. Wasserfahrzeug nach einem der Ansprüche 1 bis 31, **dadurch gekennzeichnet, dass** an der Halteleine (2) vor Überlastung schützende Elemente vorhanden sind.

33. Wasserfahrzeug nach einem der Ansprüche 1 bis 32, **dadurch gekennzeichnet, dass** an äußeren Rändern des flächigen Elementes (1) Windabrisselemente vorhanden sind.

34. Wasserfahrzeug nach einem der Ansprüche 1 bis 33, **dadurch gekennzeichnet, dass** am Fahrzeugkörper (3) Halteleinenanschlagselemente (35) vorhanden sind.

35. Wasserfahrzeug nach einem der Ansprüche 1 bis 34, **dadurch gekennzeichnet, dass** am Fahrzeugkörper (3) mindestens ein hydrodynamisch wirksames Element (31) angeordnet ist.

36. Wasserfahrzeug nach Anspruch 35, **dadurch gekennzeichnet, dass** das/die Element(e) (3) um eine Achse verschwenkbar sind.

37. Wasserfahrzeug nach einem der Ansprüche 35 oder 36, **dadurch gekennzeichnet, dass** der Schwenkwinkel des/der Elemente(s) (31) in Abhängigkeit der Fahrzeuggeschwindigkeit und/oder der Zugkraft des flächigen Elementes (1) einstellbar ist.

38. Wasserfahrzeug nach einem der Ansprüche 1 bis 37, **dadurch gekennzeichnet, dass** ein am Fahrzeugkörper (3) befestigtes Schwert in Bezug zur Längsachse drehbar ist.

## Claims

1. Wind-driven watercraft, having a flat element which is held directly on the craft body by means of a holding line, and the holding line being attached to at least three points on the flat element (1) that are arranged at a distance from each other, and the point of application of force (4) of the holding line on the craft body (3) being variable in dependence on wind direction and travel direction, **characterized in that** the aerodynamic characteristics of the flat element are variable.

2. Watercraft according to Claim 1, **characterized in that** at least one control line, routed to the craft body (3), is attached to the flat element (1).

3. Watercraft according to Claim 2, **characterized in that** two control lines are provided, which are attached to outer edges of the flat element.

4. Watercraft according to Claim 1, **characterized in that**, by means of a holding-line control system, the flat element can be so aligned and set into the wind that it can be moved upwards and downwards in the vertical direction in wind strata having high wind speeds.

5. Watercraft according to any one of Claims 1 to 4, **characterized in that** at least one compressed-gas chamber (7) is realized on the flat element and/or is attached thereto, by means of which chamber the form and shape of the flat element can be varied.

6. Watercraft according to Claim 5, **characterized in that** the compressed-gas chamber(s) (7) is/are filled with compressed gas of a density which is less than that of air.

7. Watercraft according to either of Claims 5 or 6, **characterized in that** apertures, for the purpose of filling with the use of the wind dynamic pressure, are provided on the compressed-gas chamber(s) (7).

8. Watercraft according to any one of Claims 5 to 7, **characterized in that** the compressed-gas chamber(s) (7) is/are realized at the edge of the flat element (1).

9. Watercraft according to any one of Claims 5 to 8, **characterized in that** lifting force of the compressed-gas chamber(s) (7) is ≥ the weight of the flat element (1).

10. Watercraft according to any one of Claims 5 to 9, **characterized in that** the at least one compressed-gas chamber (7) can be connected to at least one compressed-gas accumulator (104) by means of a first line (111) and a valve (102), and the compressed-gas chamber (7) can be filled from the gas accumulator (104).

11. Watercraft according to Claim 10, **characterized in that** a second line (103), which can be connected to the compressed-gas chamber (7) or is connected to the first line (111), is provided for the purpose of returning gas from the compressed-gas chamber (7) into the at least one or a second compressed-gas accumulator (104, 114).

12. Watercraft according to either of Claims 10 or 11, **characterized in that** at least the first line (111) is realized so as to be portionally flexible.

13. Watercraft according to any one of Claims 10 to 12, **characterized in that** a compressor (107) is interconnected in the second line (103).

14. Watercraft according to any one of Claims 10 to 13, **characterized in that** there exists in the first gas accumulator (104) a pressure of the compressed gas which is ≥ the internal pressure in the compressed-gas chamber (7).

15. Watercraft according to any one of Claims 10 to 14, **characterized in that** the compressor (107) is arranged, with its suction side to the compressed-gas chamber (7) and with the pressure side to a compressed-gas accumulator (104, 114), in the second line (103).

16. Watercraft according to any one of Claims 10 to 15, **characterized in that** the second line (103), with the compressor (107), in the form of a bypass line around a valve (102), is connected to the first line (111).

17. Watercraft according to any one of Claims 10 to 15, **characterized in that** the first line (111) is routed as a bypass line around a compressor (107), and a two-way valve is arranged in the first line (111).

18. Watercraft according to any one of Claims 10 to 17, **characterized in that** the compressed-gas chamber (7) and compressed-gas accumulator (104) are filled with a gas having a density which is less than that of air.

19. Watercraft according to any one of Claims 10 to 18, **characterized in that** the at least one compressed-gas accumulator (104, 114) can be attached to the craft.

20. Watercraft according to any one of Claims 10 to 18, **characterized in that** at least one closable connecting piece (108) for the first line (111) is provided on the compressed-gas chamber (7).

21. Watercraft according to any one of Claims 1 to 20, **characterized in that** at least one element (32) that can be pivoted in an aerodynamically effective manner is provided on the flat element (1).

22. Watercraft according to any one of Claims 1 to 21, **characterized in that** the flat element (1) is composed of a flexible material.

23. Watercraft according to any one of Claims 1 to 22, **characterized in that** the holding line (2), with an element (5) for varying the length of the holding line(s) between the flat element (1) and the craft body (3), is held on the craft body (3).

24. Watercraft according to any one of Claims 1 to 23, **characterized in that** the point of application of force (4) is variable along a guide (8, 9) attached to the craft body (3).

25. Watercraft according to any one of Claims 1 to 23, **characterized in that** the point of application of force (4) is arranged eccentrically on a rotary disc (11) attached to the craft body (3).

26. Watercraft according to any one of Claims 1 to 23, **characterized in that** the point of application of force (4) is arranged on a cantilever arm (10) pivotally attached to the craft body (3).

27. Watercraft according to any one of Claims 1 to 26, **characterized in that** the point of application of force (4) is variable relative to the lateral centre of pressure of the craft body (3).

28. Watercraft according to any one of Claims 1 to 27, **characterized in that** the point of application of force (4) is variable in parallel and/or orthogonally relative to the longitudinal axis of the watercraft.

29. Watercraft according to any one of Claims 1 to 28, **characterized in that** the length of the holding line (2) is variable.

30. Watercraft according to any one of Claims 1 to 29, **characterized in that** the holding line (2) is routed via at least one deflection pulley (6).

31. Watercraft according to Claim 30, **characterized in that** the deflection pulley(s) (6) is/are displaceable.

32. Watercraft according to any one of Claims 1 to 31, **characterized in that** elements for protection against overload are provided on the holding line (2).

33. Watercraft according to any one of Claims 1 to 32, **characterized in that** wind-breaking elements are provided at the outer edges of the flat element (1).

34. Watercraft according to any one of Claims 1 to 33, **characterized in that** holding-line stop elements (35) are provided on the craft body (3).

35. Watercraft according to any one of Claims 1 to 34, **characterized in that** at least one hydrodynamically effective element (31) is arranged on the craft body (3).

36. Watercraft according to Claim 35, **characterized in that** the element(s) (3) are pivotable about an axis.

37. Watercraft according to either of Claims 35 or 36, **characterized in that** the pivoting angle of the element(s) (31) is adjustable in dependence on the craft speed and/or on the tensile force of the flat element (1).

38. Watercraft according to any one of Claims 1 to 37, **characterized in that** a strut attached to the craft body (3) is rotatable in relation to the longitudinal axis.

## Revendications

1. Embarcation à propulsion éolienne comportant un élément étendu, qui est maintenu par un filin de retenue directement sur le corps de l'embarcation et le filin de retenue est fixé au moins en trois points agencés à distance l'un de l'autre sur l'élément étendu (1), et le point d'application de force (4) du filin de retenue sur le corps (3) de l'embarcation est modifiable en fonction de la direction du vent et du déplacement, **caractérisée en ce que** les propriétés aérodynamiques de l'élément étendu sont modifiables.

2. Embarcation selon la revendication 1, **caractérisée en ce qu'**au moins un filin de commande, guidé vers le corps (3) de l'embarcation, est fixé sur l'élément étendu (1).

3. Embarcation selon la revendication 2, **caractérisée en ce qu'**il est prévu deux filins de commande, qui sont fixés sur des bords extérieurs de l'élément étendu.

4. Embarcation selon la revendication 1, **caractérisée en ce que**, au moyen d'une commande du filin de retenue, l'élément étendu peut être orienté et réglé dans le vent, de telle sorte qu'il peut être déplacé dans la direction verticale vers le haut et/ou le bas dans des couches de vent avec des vitesses de vent plus élevées.

5. Embarcation selon l'une quelconque des revendications 1 à 4, **caractérisée en ce qu'**au moins une chambre de gaz sous pression (7) est réalisée sur l'élément étendu et/ou est fixée contre celui-ci, par laquelle il est possible de faire varier la forme et la configuration de l'élément étendu.

6. Embarcation selon la revendication 5, **caractérisée en ce que** la/les chambre(s) de gaz sous pression (7) est/sont remplie(s) de gaz comprimé à densité plus faible que l'air.

7. Embarcation selon la revendication 5 ou 6, **caractérisée en ce que** sur la/les chambre(s) de gaz sous pression (7) sont prévus des orifices pour le remplissage utilisant la pression dynamique du vent.

8. Embarcation selon l'une quelconque des revendications 5 à 7, **caractérisée en ce que** la/les chambre(s) de gaz sous pression (7) est/sont réalisée(s) sur le bord de l'élément étendu (1).

9. Embarcation selon l'une quelconque des revendications 5 à 8, **caractérisée en ce que** la force ascensionnelle de la ou des chambre(s) de gaz sous pression (7) est ≥ au poids de l'élément étendu (1).

10. Embarcation selon l'une quelconque des revendications 5 à 9, **caractérisée en ce que** ladite au moins une chambre de gaz sous pression (7) peut être reliée via une première conduite (111) et une vanne (102) à au moins un réservoir de gaz sous pression (104) et la chambre de gaz sous pression (7) peut être remplie à partir du réservoir de gaz (104).

11. Embarcation selon la revendication 10, **caractérisée en ce qu'**une deuxième conduite (103), qui peut être raccordée à la chambre de gaz sous pression (7) ou est raccordée à la première conduite (111), est prévue pour renvoyer le gaz hors de la chambre de gaz sous pression (7) dans ledit au moins un ou un deuxième réservoir de gaz sous pression (104, 114).

12. Embarcation selon la revendication 10 ou 11, **caractérisée en ce qu'**au moins la première conduite (111) est flexible par zones.

13. Embarcation selon l'une quelconque des revendications 10 à 12, **caractérisée en ce qu'**un compresseur (107) est intercalé dans la deuxième conduite (103).

14. Embarcation selon l'une quelconque des revendications 10 à 13, **caractérisée en ce que** dans le premier réservoir de gaz (104) règne une pression du gaz comprimé qui est ≥ à la pression intérieure dans la chambre de gaz sous pression (7).

15. Embarcation selon l'une quelconque des revendications 10 à 14, **caractérisée en ce que** le compresseur (107) est monté dans la deuxième conduite (103) avec son côté aspiration contre la chambre de gaz sous pression (7) et avec le côté pression contre un réservoir de gaz sous pression (104, 114).

16. Embarcation selon l'une quelconque des revendications 10 à 15, **caractérisée en ce que** la deuxième conduite (103) avec le compresseur (107) est raccordée à la première conduite (111) sous la forme d'une conduite de dérivation autour d'une vanne (102).

17. Embarcation selon l'une quelconque des revendications 10 à 15, **caractérisée en ce que** la première conduite (111) est guidée sous forme de conduite de dérivation autour d'un compresseur (107), et une vanne à deux voies est montée dans la première conduite (111).

18. Embarcation selon l'une quelconque des revendications 10 à 17, **caractérisée en ce que** la chambre de gaz sous pression (7) et le réservoir de gaz sous pression (104) sont remplis d'un gaz dont la densité est inférieure à celle de l'air.

19. Embarcation selon l'une quelconque des revendications 10 à 18, **caractérisée en ce que** ledit au moins un réservoir de gaz sous pression (104, 114) peut être fixé sur l'embarcation.

20. Embarcation selon l'une quelconque des revendications 10 à 18, **caractérisée en ce qu'**au moins une tubulure de raccordement (108), pouvant être fermée, est prévue pour la première conduite (111) sur la chambre de gaz sous pression (7).

21. Embarcation selon l'une quelconque des revendications 1 à 20, **caractérisée en ce qu'**au moins un élément (32), à action aérodynamique et apte à pivoter, est présent sur l'élément étendu (1).

22. Embarcation selon l'une quelconque des revendications 1 à 21, **caractérisée en ce que** l'élément étendu (1) est réalisé dans un matériau flexible.

23. Embarcation selon l'une quelconque des revendications 1 à 22, **caractérisée en ce que** le filin de retenue (2) est maintenu sur le corps (3) de l'embarcation au moyen d'un élément (5) destiné à faire varier la longueur du/des filin(s) de retenue (2) entre l'élément étendu (1) et le corps (3) de l'embarcation.

24. Embarcation selon l'une quelconque des revendications 1 à 23, **caractérisée en ce que** le point d'application de force (4) est modifiable le long d'un guidage (8, 9) fixé sur le corps (3) de l'embarcation.

25. Embarcation selon l'une quelconque des revendications 1 à 23, **caractérisée en ce que** le point d'application de force (4) est disposé de manière excentrique sur un plateau tournant (11) fixé sur le corps (3) de l'embarcation.

26. Embarcation selon l'une quelconque des revendications 1 à 23, **caractérisée en ce que** le point d'application de force (4) est disposé sur un bras en porte-à-faux (10) fixé de manière pivotante sur le corps (3) de l'embarcation.

27. Embarcation selon l'une quelconque des revendications 1 à 26, **caractérisée en ce que** le point d'application de force (4) est modifiable par rapport au point de pression latéral du corps (3) de l'embarcation.

28. Embarcation selon l'une quelconque des revendications 1 à 27, **caractérisée en ce que** le point d'application de force (4) est modifiable parallèlement et/ou orthogonalement par rapport à l'axe longitudinal de l'embarcation.

29. Embarcation selon l'une quelconque des revendications 1 à 28, **caractérisée en ce que** la longueur du filin de retenue (2) est modifiable.

30. Embarcation selon l'une quelconque des revendications 1 à 29, **caractérisée en ce que** le filin de retenue (2) est guidé sur au moins une poulie de renvoi (6).

31. Embarcation selon la revendication 30, **caractérisée en ce que** la/les poulie(s) de renvoi est/sont mobiles.

32. Embarcation selon l'une quelconque des revendications 1 à 31, **caractérisée en ce que** des éléments de protection contre la surcharge sont prévus sur le filin de retenue (2).

33. Embarcation selon l'une quelconque des revendications 1 à 32, **caractérisée en ce que** des éléments de rupture du vent sont présents sur les bords extérieurs de l'élément étendu (1).

34. Embarcation selon l'une quelconque des revendications 1 à 33, **caractérisée en ce que** des éléments de butée (35) de filin de retenue sont présents sur le corps (3) de l'embarcation.

35. Embarcation selon l'une quelconque des revendications 1 à 34, **caractérisée en ce qu'**au moins un élément (31) à action hydrodynamique est disposé sur le corps (3) de l'embarcation.

36. Embarcation selon la revendication 35, **caractérisée en ce que** le/les élément(s) (3) peuvent pivoter autour d'un axe.

37. Embarcation selon la revendication 35 ou 36, **caractérisée en ce que** l'angle de pivotement de ou des élément(s) (31) peut être réglé en fonction de la vitesse de l'embarcation et/ou de la force de traction de l'élément étendu (1).

38. Embarcation selon l'une quelconque des revendications 1 à 37, **caractérisée en ce qu'**une aile de dérive, fixée sur le corps (3) de l'embarcation, peut tourner par rapport à l'axe longitudinal.
